(19) Europäisches Patentamt
European Patent Office
Office européen des brevets

(11) **EP 3 333 611 B1**

(12) **EUROPÄISCHE PATENTSCHRIFT**

(45) Veröffentlichungstag und Bekanntmachung des Hinweises auf die Patenterteilung:
**02.02.2022  Patentblatt 2022/05**

(21) Anmeldenummer: **17205928.9**

(22) Anmeldetag: **07.12.2017**

(51) Internationale Patentklassifikation (IPC):
**G02B 21/16** (2006.01)    **G02B 5/28** (2006.01)
**G02B 27/14** (2006.01)    **G01N 21/64** (2006.01)
**G02B 21/36** (2006.01)    **G02B 21/00** (2006.01)

(52) Gemeinsame Patentklassifikation (CPC):
**G02B 21/16; G02B 5/285; G02B 21/0064;
G02B 21/0076; G02B 21/361; G02B 27/142**

(54) **OPTISCHES GERÄT MIT MINDESTENS EINEM SPEKTRAL SELEKTIVEN BAUELEMENT**

OPTICAL DEVICE WITH AT LEAST ONE SPECTRALLY SELECTIVE COMPONENT

APPAREIL OPTIQUE POURVU D'AU MOINS UN COMPOSANT SPECTRALEMENT SÉLECTIF

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **09.12.2016   DE 102016124004**

(43) Veröffentlichungstag der Anmeldung:
**13.06.2018   Patentblatt 2018/24**

(73) Patentinhaber: **Leica Microsystems CMS GmbH
35578 Wetzlar (DE)**

(72) Erfinder: **Gugel, Hilmar
69221 Dossenheim (DE)**

(74) Vertreter: **Schaumburg und Partner
Patentanwälte mbB
Postfach 86 07 48
81634 München (DE)**

(56) Entgegenhaltungen:
WO-A1-2016/198694    DE-A1-102006 034 908
DE-A1-102010 045 856    DE-A1-102014 008 098
US-A1- 2005 017 197

**Beschreibung**

Die Erfindung betrifft ein optisches Gerät, insbesondere ein Mikroskop, mit mindestens einem in einem Strahlengang angeordneten spektral selektiven Bauelement zur spektralen Beeinflussung von Licht, das längs des Strahlengangs propagiert, wobei das spektral selektive Bauelement mindestens eine Wirkfläche mit einer spektralen Kante aufweist, die mit dem Ort des Einfalls des Lichtes auf der Wirkfläche variiert.

In einer Vielzahl optischer Geräte werden dichroitische Strahlteiler zum Aufspalten oder Vereinigen von Licht sowie Farbfilter eingesetzt, um das Licht in seinen spektralen Eigenschaften zu beeinflussen. Diese Bauelemente sind in der Regel so ausgebildet, dass mit ihrer Wahl zur Realisierung des Gerätes dessen spektrale Eigenschaften festgelegt sind, d.h. im Gerätebetrieb von dem Benutzer nicht mehr geändert werden können. Eine gewisse Flexibilität im Gerätebetrieb kann beispielsweise dadurch erzielt werden, dass verschiedene Filter auf einem Filterrad oder einem Filterschieber angeordnet und je nach Anwendung einer dieser Filter wirksam geschaltet wird. Eine stufenlose Änderung von Filterkurven ist jedoch mittels einer solchen Anordnung nicht möglich, was insbesondere in lichtmikroskopischen Anwendungen von Nachteil ist.

In einer Reihe von mikroskopischen Anwendungen, insbesondere in der Fluoreszenzmikroskopie, wird die zur untersuchende Probe mit Licht einer oder mehrerer verschiedener Wellenlängen bzw. Wellenlängenbereiche beleuchtet und das von der Probe ausgehende Licht mittels mindestens eines Detektors, z.B. eines Flächendetektors wie einer Kamera, eines Zeilendetektors oder eines Punktdetektors erfasst. Hierbei ist das im Strahlengang propagierende Licht spektral in verschiedene Anteile zu trennen. So wird etwa in der Auflichtmikroskopie die Probe häufig durch das Objektiv beleuchtet und das von der Probe ausgehende Licht von demselben Objektiv gesammelt. Das Trennen bzw. das Vereinigen von Beleuchtungs- und Detektionslicht erfolgt dann üblicherweise mit Hilfe von dichroitischen Strahlteilern, die auf die unterschiedlichen spektralen Eigenschaften von Beleuchtungs- und Detektionslicht ausgelegt sind. Das Detektionslicht wird dann im Detektionsstrahlengang durch dichroitische Strahlteiler in verschiedene Detektionswellenlängenbänder aufgeteilt und mit verschiedenen Detektoren erfasst. Zur besseren Trennung der verschiedenen Wellenlängenbänder können dabei im Detektionsstrahlengang insbesondere dichroitische Bandpassfilter eingesetzt werden, die Licht, das außerhalb des gewünschten Spektralbereichs liegt, unterdrücken. Auch im Beleuchtungsstrahlengang kommen dichroitische Bandpassfilter zum Einsatz, dort zur spektralen Eingrenzung des auf die Probe geleiteten Beleuchtungslichts.

Die insbesondere in der Mikroskopie eingesetzten dichroitischen Strahlteiler und Bandpassfilter besitzen eine fest vorgegebene Charakteristik bezüglich Transmission und Reflexion. Dabei können die Strahlteiler mit jeweils einem Bandpassfilter für die Anregung und die Detektion zusammen in einer Komponente, z. B. einem Filterwürfel verbaut sein. Mehrere Filterwürfel mit unterschiedlichen spektralen Eigenschaften können dann beispielsweise auf einem Auswahlrad angeordnet sein, durch das der Benutzer beim Mikroskopieren den für die jeweilige Anwendung am besten geeigneten Filterwürfel in den Strahlengang einschwenken kann. Jedoch sind die spektralen Eigenschaften eines solchen Filterwürfels unveränderbar festgelegt. Eine auf die jeweilige Anwendung angepasste Auswahl von spektralen Eigenschaften kann nur im Rahmen der zur Verfügung stehenden Filterwürfeln erfolgen. Gleiches gilt für Filter und Strahlteiler, die sich im Detektionsstrahlengang befinden, um die verschiedenen Wellenlängenbänder voneinander zu trennen oder unerwünschte Wellenlängenbänder zu unterdrücken.

In der DE 10 2006 034 908 A1 wird vorgeschlagen, in einem Abtastmikroskop ein spektral selektives Bauelement in Form eines Kantenfilter einzusetzen, dessen Grenzwellenlänge, auch als spektrale Kante bezeichnet, längs des Filters variiert. Dabei trennt die spektrale Kante eines solchen auch als Verlaufsfilter bezeichneten Bauelementes einen Wellenlängenbereich der Transmission von einem Wellenlängenbereich, in dem keine Transmission stattfindet.

Die Verwendung eines solchen Kantenfilters mit örtlich variabler spektraler Kante ermöglicht es dem Benutzer, die spektrale Charakteristik des Detektors nach Wunsch einzustellen. Jedoch treten hier in der DE 10 2006 034 908 A1 nicht angesprochene Probleme auf. So kann eine ausreichend steile spektrale Kante, d.h. eine ausreichend scharfe Grenzwellenlänge, nur dann realisiert werden, wenn das auf den Filter fallende Detektionslichtbündel einen hinreichend kleinen Durchmesser hat. Jede Zunahme des Bündeldurchmessers führt zwangsläufig zu einer Abnahme der Kantensteilheit. Je geringer die Kantensteilheit ist, desto unpräziser ist die spektrale Charakteristik des Detektors.

Außerdem hängt die spektrale Kantenlage des Filters vom Einfallswinkel ab, unter dem das Detektionslichtbündel auf den Filter fällt.

Zum Stand der Technik wird ergänzend auf die Veröffentlichung "Image Splitting Optics, W-View GEMINI" Technical Note, Juni 2014 von Hamamatsu verwiesen.

Aus der Druckschrift DE 10 2014 008098 A1 ist ein optisches Gerät nach dem Oberbegriff des Anspruchs 1 bekannt.

Die Druckschrift DE 10 2010 045856 A1 offenbart eine Filteranordnung mit einem Verlaufsfilter, über dessen Wirkfläche ein Abbildungsstrahlengang mit Hilfe eines Scanspiegels geführt wird. Der Verlaufsfilter ist in einer optischen Pupille bzw. in einer Fourierebene des Abbildungsstrahlengangs positioniert.

Aufgabe der vorliegenden Erfindung ist es, ein optisches Gerät, insbesondere ein Mikroskop, anzugeben, das

2

es ermöglicht, die spektralen Eigenschaften des Gerätes im Gerätebetrieb in einfacher Weise zu variieren.

Die Erfindung löst diese Aufgabe durch den Gegenstand des unabhängigen Anspruchs 1. Vorteilhafte Weiterbildungen sind in den abhängigen Ansprüchen sowie der folgenden Beschreibung angegeben.

Das optische Gerät ist insbesondere ein Weitfeldmikroskop, vorzugsweise in Form eines Fluoreszenzmikroskops, eines Hellfeldmikroskops, eines Lichtblattmikroskops mit oder ohne Schiefebenenbeleuchtung, eines Weitfeld-Multiphotonenmikroskops, eines Dunkelfeldmikroskops, eines Phasenkontrastmikroskops oder eines Differentialinterferenzkontrastmikroskops.

Das Weitfeldmikroskop ist jedoch nicht auf die vorgenannten Ausführungsformen beschränkt. Vielmehr soll es jedes Mikroskop umfassen, bei dem wie in der klassischen Lichtmikroskopie der beobachtete Probenbereich in seiner Gesamtheit gleichzeitig abgebildet wird. Insoweit lässt sich das erfindungsgemäße Weitfeldmikroskop gegenüber Mikroskopanordnungen abgrenzen, die den abzubildenden Probenbereich sukzessive abrastern, wie z.B. in der Konfokalmikroskopie.

Gemäß der Erfindung ist ein optisches Gerät mit einem optischen System im Anspruch 1 definiert.

In dieser Ausführungsform ist das spektral selektive Bauelement beispielsweise als mehrschichtiges Interferenzfilter oder als Fabry-Perot-Filter ausgebildet,

Die gemäß den vorgenannten Aspekten der Erfindung vorgesehenen optischen Geräte sind vorzugsweise jeweils als Mikroskop ausgeführt.

Ferner ist das in dem jeweiligen optischen Gerät verwendete optische System vorzugsweise eine Abbildungsoptik, insbesondere ein Objektiv.

Die Erfindung sieht zwei alternative Positionierungen der Wirkfläche des spektral selektiven Bauelementes in dem Strahlengang vor. In einer ersten Positionierung befindet sich die Wirkfläche an einer Stelle, an der eine Variation der spektralen Kante der Wirkfläche, die durch eine Variation des Einfallswinkels, unter dem das Licht auf die Wirkfläche fällt, verursacht ist, zumindest teilweise durch eine gegenläufige Variation der spektralen Kante der Wirkfläche kompensiert ist, die durch eine Variation des Ortes, an dem das Licht auf die Wirkfläche fällt, verursacht ist. In einer zweiten Positionierung befindet sich Wirkfläche am Ort eines Bildes einer Pupille des optischen Systems.

In der vorgenannten ersten Positionierung kann die Variation des Einfallswinkels, unter dem das Licht auf die Wirkfläche fällt, beispielsweise dadurch zustande gekommen, dass das Licht aus verschiedenen Objektpunkten stammt und deshalb aus verschiedenen Lichtbündeln zusammengesetzt ist, deren Hauptstrahlen unterschiedliche Neigungen relativ zur optischen Achse des Strahlengangs und dementsprechend unterschiedliche Einfallswinkel aufweisen. Dies ist beispielsweise dann der Fall, wenn das erfindungsgemäße optische Gerät als Weitfeldmikroskop eingesetzt wird. Die Variation des Einfallswinkels, unter dem das Licht auf die Wirkfläche fällt, kann jedoch beispielsweise auch dadurch verursacht werden, dass das Licht in dem Strahlengang eine Abtastbewegung ausführt und so seinen Einfallswinkel mit der Zeit kontinuierlich ändert. Dies ist beispielsweise in dem Detektionsstrahlengang eines Abtastmikroskops der Fall, in dem sich ein sogenannter Non-Descanned-Detektor befindet, d.h. ein Detektor, der das Detektionslichtbündel empfängt, ohne dass dieses zuvor auf eine Abtasteinheit zurückgeführt wird die das Beleuchtungslichtbündel so ablenkt, dass dieses in einer Abtastbewegung über die Probe geführt wird.

In der ersten Positionierung ist die Wirkfläche des spektral selektiven Bauelementes vorzugsweise nicht senkrecht, sondern schräg zur optischen Achse des Strahlengangs angeordnet. Diese Schrägstellung bewirkt, dass sich im Unterschied zu einer senkrechten Ausrichtung die Lage der spektralen Kante über den gesamten Einfallswinkelbereich monoton mit dem Einfallswinkel ändert. Dadurch ist es möglich, die einfallswinkelabhängige Kantenlagenverschiebung durch die ebenfalls monoton verlaufende, gegenläufige Kantenlagenverschiebung zu kompensieren, die infolge der Variation des Lichteinfallortes auf der Wirkfläche des spektral selektiven Bauelementes auftritt.

Die vorgenannte zweite Positionierung ist insbesondere dann gewinnbringend anwendbar, wenn das spektral selektive Bauelement mit seiner Wirkfläche senkrecht oder jedenfalls nahezu senkrecht zur optischen Achse des Strahlengangs angeordnet ist und der maximale Einfallswinkel (bezogen auf die Senkrechte des spektral selektiven Bauelements), unter dem das Lichtbündel auf die Wirkfläche des Bauelementes fällt, nicht zu groß ist. In diesem Fall wird durch die Anordnung der Wirkfläche am Ort des Pupillenbildes eine Verschiebung der spektralen Kante infolge einer Variation des Lichteinfallortes auf der Wirkfläche vermieden, während die durch eine Variation des Einfallwinkels hervorgerufene Verschiebung der spektralen Kante vergleichsweise gering und damit tolerierbar ist. Typischerweise gilt dies für Einfallswinkel, die gleich oder kleiner als 35°, vorzugsweise gleich oder kleiner als 30°, und bestenfalls gleich oder kleiner als 20° sind.

In der zweiten Positionierung, in der das spektral selektive Bauelement im Pupillenbild oder jedenfalls in dessen unmittelbarer Nähe angeordnet ist, treffen sich die Hauptstrahlen des von verschiedenen Objektpunkten kommenden Lichtes zumindest annähernd an gleicher Stelle auf der Wirkfläche und werden deshalb auch in gleicher Weise spektral durch die Wirkfläche beeinflusst. Ist das spektral selektive Bauelement beispielsweise als Filter ausgeführt, so erfahren die von verschiedenen Objektpunkten kommenden Hauptstrahlen des Lichtes in diesem Fall dieselbe Filterfunktion.

In der zweiten Positionierung bildet das spektral selektive Bauelement beispielsweise einen Kantenfilter, z.B. einen Kurzpassfilter, einen Langpassfilter oder einen Bandpassfilter, wobei der Bandpassfilter aus einem Kurzpassfilter und einem Langpassfilter gebildet sein kann, die längs der optischen Achse des Strahlengangs hintereinander angeordnet sind.

Die spektrale Kante, d.h. die Grenzwellenlänge zwischen Reflexion und Transmission, lässt sich beispielsweise als diejenige Wellenlänge definieren, bei der die Transmission gerade 50% beträgt. Es versteht sich aber von selbst, dass die spektrale Kante auch in anderer Weise definiert werden kann.

Vorzugsweise ist die Wirkfläche des spektral selektiven Bauelementes in der ersten Positionierung in dem Strahlengang derart angeordnet, dass ihre Flächennormale zur optischen Ache des Strahlengangs unter einem vorbestimmten Winkel geneigt ist, und dass die Wirkfläche längs der optischen Achse des Strahlengangs einen Abstand zum Ort des Bildes der Pupille aufweist, der in Abhängigkeit der Variation des Einfallswinkels des Lichts vorbestimmt ist

Der vorgenannte Abstand z ist derart vorbestimmt, dass vorzugsweise folgende Bedingung erfüllt ist:

$$z \leq -2 \cdot \frac{D_E}{D_L} \cdot \vartheta \cdot \frac{sin(90°+\varphi_0-\vartheta)}{sin(\vartheta)}$$

worin $D_E$ eine Einfallsdispersion bezeichnet, welche die Änderung der spektralen Kante in Abhängigkeit des Einfallswinkels, unter dem Licht auf die Wirkfläche fällt, angibt; $D_L$ eine Längendispersion bezeichnet, welche die Änderung der spektralen Kante in Abhängigkeit des Ortes, auf dem das Licht auf die Wirkfläche fällt, angibt; $\vartheta$ einen Winkel zwischen einem Hauptstrahl des Lichts und der optischen Achse des Strahlengangs am Ort des Bildes der Pupille angibt; und $\varphi_0$ den vorbestimmten Winkel angibt, unter dem die Flächennormale der Wirkfläche zur optischen Achse des Strahlengangs geneigt ist. Die vorstehende Beziehung wird weiter unten im Einzelnen hergeleitet.

Der vorbestimmte Winkel, unter dem die Flächennormale der Wirkfläche zur optischen Achse des Strahlengangs geneigt ist, ist beispielsweise gleich oder kleiner als 65°, vorzugsweise gleich oder kleiner als 45° und in einer ganz besonders bevorzugten Ausführung gleich oder kleiner als 30°. Dabei ist das spektral selektive Bauelement vorzugsweise in dem Strahlengang so angeordnet, dass die Reflexionsebene, d.h. die Ebene, die durch den einfallenden Strahl und den reflektierten Strahl aufgespannt wird, parallel zu der Richtung liegt, in der die spektrale Kante der Wirkfläche variiert.

Vorzugsweise weist das erfindungsgemäße optische Gerät einen Antrieb auf, der ausgebildet ist, das spektral selektive Bauelement im Strahlengang derart zu verstellen, dass der Ort des Einfalls des Lichts auf die Wirkfläche einstellbar ist. Der Antrieb ist beispielsweise als mechanischer, pneumatischer, elektrischer oder piezoelektrischer Antrieb ausgeführt. So kann beispielsweise ein Elektromotor eingesetzt werden, um die gewünschte Position des spektral selektiven Bauelementes einzustellen. Die Einstellung kann durch den Benutzer selbst mittels einer entsprechenden Software vorgenommen werden. Es ist aber auch möglich, den Antrieb automatisiert zu steuern.

Vorzugsweise ist das spektral selektive Bauelement mittels des Antriebs längs einer Variationsachse verstellbar, längs der die spektrale Kante der Wirkfläche variiert. Hat die Wirkfläche des spektral selektiven Bauelementes beispielsweise die Form eines Rechtecks, so kann die Wirkfläche mittels des Antriebs längs der parallel zur langen Seite dieses Rechtecks verlaufenden Variationsachse verstellt werden, um die gewünschte spektrale Kante einzustellen. Ist hingegen das spektral selektive Bauelement beispielsweise so ausgeführt, dass sich die spektrale Kante der Wirkfläche längs eines Kreises ändert, so kann die Wirkfläche mittels des Antriebs gedreht werden, um die Kantenlage einzustellen.

Es ist auch möglich, das spektral selektive Bauelement längs des Strahlengangs verschiebbar auszuführen, um eine flexible Anpassung des Abstandes zwischen der Wirkfläche und dem Pupillenbild längs der optischen Achse des Strahlengangs zu ermöglichen. Auch eine solche Verschiebung kann mittels eines Antriebs oben genannter Art erfolgen, vorzugsweise automatisiert. Der jeweilige Antrieb lässt sich basierend auf einem festen Programmablauf oder mittels einer Regelung, die auf bestimmte Messdaten wie Lichtintensität oder Strahlposition reagiert, ansteuern. Hierbei ist es insbesondere möglich, dass der jeweilige Antrieb die ihm zugeordnete Positionierung vor oder auch während der Messung anpasst, beispielsweise um verbleibende Verschiebungen der Kantenlage dynamisch auszugleichen.

Vorzugsweise ist der Strahlengang, in dem das mindestens eine spektral selektive Bauelement angeordnet ist, durch einen Beleuchtungsstrahlengang oder einen Detektionsstrahlengang oder einen dem Beleuchtungsstrahlengang und dem Detektionsstrahlengang gemeinsamen Strahlengangabschnitt gebildet. In letzterer Ausführungsform dient das spektral selektive Bauelement beispielsweise der Trennung und/oder der Vereinigung von Beleuchtungs- und Detektionsstrahlengang.

Vorzugsweise umfasst das mindestens eine spektral selektive Bauelement mindestens einen Strahlteiler und/oder mindestens einen Kantenfilter.

Der mindestens einen Kantenfilter umfasst vorzugsweise mindestens einen Kurzpassfilter, mindestens einen Langenpassfilter und/oder mindestens einen Bandpassfilter.

Vorzugsweise ist ein solcher Bandpassfilter aus einem Kurzpassfilter und einem Langpassfilter gebildet, die längs der optischen Achse des Strahlengangs hintereinander angeordnet sind.

Um den Aufbau des optischen Gerätes kompakter zu gestalten, kann es vorteilhaft sein, mehrere spektral selektive Bauelemente mit unterschiedlichen Filter- bzw. Teilerbereichen hintereinander anzuordnen. So ist es beispielsweise möglich, ein erstes Substrat vorzusehen, das einen ersten Filter- bzw. Teilerbereich aufweist, in dem die spektrale Kante von einem minimalen Wert bis zu einem mittleren Wert variiert. Ferner kann ein zweites Substrat vorgesehen werden, das einen zweiten Filter- bzw. Teilerbereich aufweist, innerhalb dessen die spektrale Kante ausgehend von dem vorstehend genannten mittleren Wert bis zu einem maximalen Wert variiert. Sind die beiden genannten Substrate beispielsweise in einem Detektionsstrahlengang hintereinander angeordnet, so können sie in der Weise verwendet werden, dass dasjenige Substrat, das die gewünschte spektrale Kante beinhaltet, in den Detektionsstrahlengang eingebracht wird, während das andere Substrat aus dem Strahlengang entfernt wird. Zusätzlich können diese Substrate auch Bereiche mit wellenlängenunabhängiger hoher Transmission aufweisen. Dadurch ist es möglich, das gerade unwirksam zu schaltende Substrat in dem Strahlengang zu belassen und lediglich dessen Bereich wellenlängenunabhängiger hoher Transmission in den Strahlengang einzubringen.

Vorzugsweise umfasst das erfindungsgemäße optische Gerät mindestens ein erstes und ein zweites Detektionsmodul, wobei der Strahlteiler das Licht spektral separiert durch Reflexion dem ersten Detektionsmodul und durch Transmission dem zweiten Detektionsmodul zuführt. In dieser Ausführungsform lässt sich das Detektionslicht in besonders einfacher Weise variabel auf die beiden Detektionsmodule verteilen.

Vorzugsweise ist ein von den beiden Detektionsmodulen gemeinsam genutzter Detektor vorgesehen, der zwei Detektorabschnitte aufweist, von denen einer das durch den Strahlteiler reflektierte Licht und der andere das durch den Strahlteiler transmittierte Licht erfasst. Als gemeinsam genutzter Detektor ist vorzugsweise ein Zeilendetektor oder ein Flächen- bzw. Array-Detektor, z.B. CCD, EMCCD, sCMOS, oder QIS (Quanta Image Sensor) verwendbar. Die Nutzung eines einzigen Detektors, dessen auszulesende Sensorelemente zu einem Teil dem einen Detektorabschnitt und zu einem anderen Teil dem anderen Detektorabschnitt zugeordnet sind, für zwei oder auch mehr als zwei Detektionsmodule ist von Vorteil, da zum einen hochwertige Detektoren teuer sind und zum anderen die betrachteten Bildfelder häufig hinreichend klein sind, wodurch sie sich durch die jeweiligen Detektorabschnitte des gemeinsamen Detektors erfassen lassen.

Da im Strahlengang des jeweiligen Detektionsmoduls zum Teil große Aperturen auftreten, ist es von Vorteil, in dem Detektionsmodul asphärische Linsen zu verwenden, um die Abbildungsfehler gering zu halten. Besonders vorteilhaft ist es, wenn diese asphärischen Linsen zusätzlich achromatisch ausgeführt sind.

Vorzugsweise umfasst das optische Gerät mindestens zwei Strahlteiler, von denen einer in dem Strahlengang dem Bild der Pupille vorgeordnet und der andere dem Bild der Pupille nachgeordnet ist. Weisen die beiden Strahlteiler gleiche Längendispersion und gleiche Einfallswinkeldispersion auf, so können sie im gleichen Abstand vor und nach dem Pupillenbild angeordnet werden. Dies begünstigt einen besonders einfachen und kompakten Aufbau.

In einer weiteren Ausgestaltung sind mindestens zwei Strahlteiler vorgesehen, die dem Bild der Pupille in unterschiedlichen Abständen vorgeordnet sind und unterschiedliche Dispersionen aufweisen, und/oder mindestens zwei Strahlteiler, die dem Bild der Pupille in unterschiedlichen Abständen nachgeordnet sind und unterschiedliche Dispersionen aufweisen. Dieser Ausgestaltung liegt der Erkenntnis zugrunde, dass der Abstand des jeweiligen spektral selektiven Bauelementes zum Pupillenbild unter anderem von der Dispersion des Bauelementes abhängt. Dies bietet die Möglichkeit, sowohl vor dem Pupillenbild als auch nach dem Pupillenbild mehr als nur ein spektral selektives Bauelement anzuordnen, wobei diejenigen Bauelemente, die sich auf einer Seite der zugehörigen Pupille befinden, unterschiedliche Dispersionen haben.

Das erfindungsgemäße optische Gerät bietet gegenüber herkömmlichen Systemen, die üblicherweise mit Interferenzfiltern arbeiten und bei denen die spektralen Eigenschaften über den Filter räumlich konstant sind, den erheblichen Vorteil, dass sich durch eine geeignete Einstellung der in dem Gerät eingesetzten spektral selektiven Bauelemente die spektralen Eigenschaften jedes einzelnen Detektionskanals durch den Benutzer erst kurz vor der Bildaufnahme festlegen lassen. Dieser Vorteil wird umso deutlicher, je mehr Detektionskanäle vorgesehen sind. Vor diesem Hintergrund weist das optische Gerät mindestens drei Detektionsmodule auf, wobei die mindestens zwei Strahlteiler eine Strahlteilerkaskade bilden, dessen erster Strahlteiler das Licht spektral separiert durch Transmission einem ersten Detektionsmodul und durch Reflexion einem zweiten Strahlteiler der Strahlteilerkaskade zuführt, der dann das durch den ersten Strahlteiler reflektierte Licht durch Transmission dem zweiten der genannten Detektionsmodule und durch Reflexion direkt oder indirekt über einen weiteren Strahlteiler einem dritten der genannten Detektionsmodule zuführt. Dieser Ausführungsform liegt die Erkenntnis zugrunde, dass die erfindungsgemäßen spektral selektiven Bauelemente, welche die vorstehend genannten Strahlteiler bilden, die Eigenschaft haben, ausgehend von der spektralen Kante einen größeren spektralen Bereich hoher Reflexion als hoher Transmission zu besitzen. Soll nun eine Anordnung mit mehr als zwei Detektionsmodulen aufgebaut werden, so ist es von Vorteil, eine Kaskadierung der Detektionsmodule nicht über die Transmission, sondern über die Reflexion vorzunehmen, um die größtmögliche spektrale Flexibilität zu erzielen.

In einer weiteren vorteilhaften Ausführungsform sind die vorstehend genannten Strahlteiler derart ausgebildet, dass die Wellenlängen der spektralen Anteile des Detektionslichtbündels, welche die Strahlteiler den ihnen jeweils zugeordneten Detektionsmodulen durch Transmission zuführen, innerhalb der Strahlteilerkaskade sukzessive abnehmen. So kann bei einer aus mehreren Detektionsmodulen bestehenden Anordnung jedes einzelne Detektionsmodul nur maximal den Teil des Detektionslichtes detektieren, der nicht von den anderen Detektionsmodulen detektiert wird. In dieser Ausführungsform ist deshalb vorgesehen, aus dem Detektionslicht denjenigen spektralen Anteil, der die größten Lichtwellenlängen aufweist, auf das in dem Detektionsstrahlengang erste Detektionsmodul zu lenken, d.h. auf dasjenige Detektionsmodul, das in Transmission dem ersten Strahlteiler nachgeordnet ist. Dementsprechend wird derjenige spektrale Anteil des Detektionslichtes, dessen Lichtwellenlängen die zweitgrößten sind, auf das innerhalb des Detektionsstrahlengangs zweite Detektionsmodul gelenkt, also auf dasjenige Detektionsmodul, das dem zweiten Strahlenteiler in Transmission nachgeordnet ist. Die weiteren spektralen Anteile werden dann in analoger Weise auf die übrigen Detektionsmodule verteilt. Die Strahlteiler sind folglich als Langpass-Strahlteiler ausgebildet.

Im Zusammenwirken mit der zuvor beschriebenen Ausführungsform entsteht somit eine Kaskadierung der Detektionsmodule nicht nur über die Reflexion an den Strahlteilern, sondern auch über die Wellenlängen der spektralen Anteile des Detektionslichtes, die mit den Detektionsmodulen detektiert werden.

Da der Reflexionsgrad der Strahlteiler üblicherweise höher als deren Transmissionsgrad ist, bietet die Strahlteilerkaskade den Vorteil höherer Lichtausbeute. Denn das Detektionslicht wird auf seinem Weg zu den jeweiligen Detektionsmodulen jeweils nur an genau einem der Strahlteiler transmittiert.

Eine Strahlteilerkaskade vorstehend beschriebener Art kann in entsprechender Ausgestaltung auch in einem Beleuchtungsstrahlengang des optischen Gerätes vorgesehen sein.

Die Erfindung wird im Folgenden anhand der Figuren näher erläutert. Darin zeigen:

Figur 1    eine schematische Darstellung eines erfindungsgemäßen spektral selektiven Bauelementes;
Figur 2    eine schematische Darstellung, welche die erfindungsgemäße erste Positionierung des spektral selektiven Bauelementes veranschaulicht;
Figur 3    eine schematische Darstellung, welche die erfindungsgemäße erste Positionierung des spektral selektiven Bauelementes in einer modifizierten Form veranschaulicht;
Figur 4    ein erfindungsgemäßes Mikroskop als Ausführungsbeispiel;
Figur 5    den Strahlengang der Pupillenabbildung zu der in Figur 4 gezeigten Ausführungsform;
Figur 6    ein erfindungsgemäßes Mikroskop in einer weiteren Ausführungsform;
Figur 7    ein erfindungsgemäßes Mikroskop in einer weiteren Ausführungsform;
Figur 8    ein erfindungsgemäßes Mikroskop in einer weiteren Ausführungsform;
Figur 9    ein erfindungsgemäßes Mikroskop in einer weiteren Ausführungsform;
Figur 10   ein erfindungsgemäßes Mikroskop in einer weiteren Ausführungsform;
Figur 11   ein erfindungsgemäßes Mikroskop in einer weiteren Ausführungsform;
Figur 12   ein erfindungsgemäßes Mikroskop in einer weiteren Ausführungsform;
Figur 13   ein erfindungsgemäßes Mikroskop in einer weiteren Ausführungsform;
Figur 14   ein erfindungsgemäßes Mikroskop in einer weiteren Ausführungsform;
Figur 15   den Strahlengang der Pupillenabbildung zu der in Figur 14 gezeigten Ausführungsform;
Figur 16   das erfindungsgemäße Mikroskop in einer weiteren Ausführungsform;
Figur 17   das erfindungsgemäße Mikroskop in einer weiteren Ausführungsform;
Figur 18   den Strahlengang der Pupillenabbildung zu der in Figur 17 gezeigten Ausführungsform;
Figur 19   das erfindungsgemäße Mikroskop in einer weiteren Ausführungsform;
Figur 20   das erfindungsgemäße Mikroskop in einer weiteren Ausführungsform;
Figur 21   das erfindungsgemäße Mikroskop in einer weiteren Ausführungsform;
Figur 22   eine beispielhafte Ausführung des spektral selektiven Bauelementes als mehrschichtiges Fabry-Perot-Filter; und
Figur 23   eine beispielhafte Ausführung des spektral selektiven Bauelementes als mehrschichtiges Interferenzfilter.

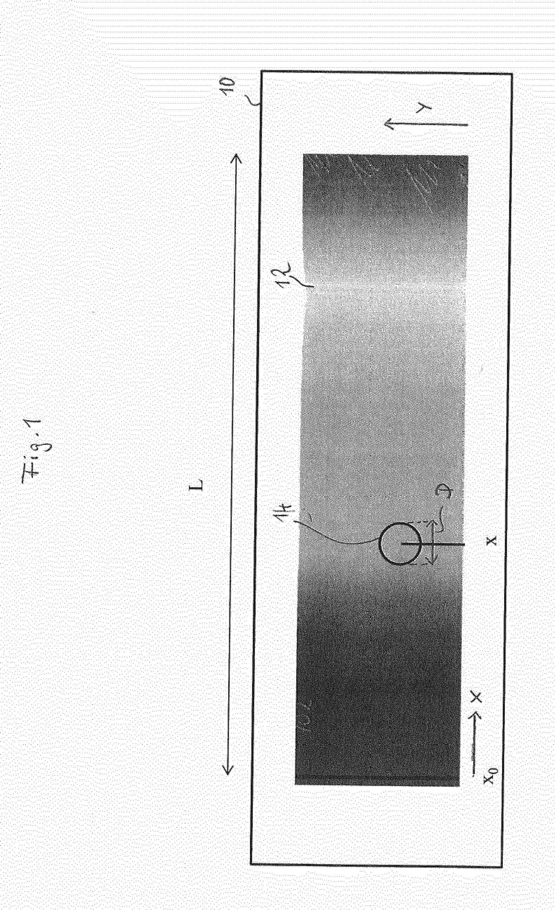

Unter Bezugnahme auf Figur 1 werden im Folgenden zunächst die Eigenschaften eines spektral selektiven Bauelementes 10 erläutert, das erfindungsgemäß in einem optischen Gerät, insbesondere in einem Mikroskop, zur spektralen Beeinflussung des Beleuchtungslichtes und/oder des Detektionslichts eingesetzt wird.

In dem Ausführungsbeispiel nach Figur 1 ist das spektral selektive Bauelement 10 ein variabler Kantenfilter, z.B. ein Langpassfilter oder ein Kurzpassfilter. Als Langpassfilter transmittiert der Kantenfilter nur das Spektrum oberhalb einer vorbestimmten Grenzwellenlänge oder spektralen Kante, während er als Kurzpassfilter das Spektrum nur unterhalb der Grenzwellenlänge transmittiert. Es ist jedoch darauf hinzuweisen, dass die nachstehenden Erläuterungen nicht auf einen Filter beschränkt sind, sondern in entsprechender Weise auch für den Fall gelten, dass das erfindungsgemäße Bauelement 10 einen spektral selektiven Strahlteiler bildet, der das Spektrum oberhalb der spektralen Kante transmittiert, während er das Spektrum unterhalb der spektralen Kante in definierter Weise reflektiert (oder umgekehrt).

In dem Ausführungsbeispiel nach Figur 1 hat das spektral selektive Bauelement 10 eine Wirkfläche 12, die längs einer Variationsachse V eine spektral wirksame Länge L aufweist. In Figur 1 liegt die Variationsachse V parallel zu einer mit x bezeichneten Längsrichtung und senkrecht zu einer mit y bezeichneten Breitenrichtung.

Das Bauelement 10 hat die Eigenschaft, dass sich seine spektrale Kante mit dem Ort des Einfalls des Lichts längs der Variationsachse V ändert. Die Variationsachse V wird deshalb auch als Dispersionsachse bezeichnet.

Die Änderung der spektralen Kante mit dem Ort des Einfalls des Lichtes längs der Variationsachse V kann, wie weiter unten im Einzelnen dargelegt, linear oder nichtlinear, z.B. quadratisch, exponentiell oder in anderer Weise, erfolgen. Demgegenüber sind die spektralen Eigenschaften des Kantenfilters 10, insbesondere dessen spektrale Kante, in der zur Variationsachse V senkrechten Breitenrichtung y in dem Ausführungsbeispiel nach Figur 1 weitgehend konstant. Der durch das Licht auf der Wirkfläche 12 des Kantenfilters 10 erzeugte Lichtfleck ist in Figur 1 mit 14 bezeichnet.

Für die nachfolgenden Erläuterungen wird angenommen, dass die spektrale Kante d.h. die Grenzwellenlänge zwischen Transmission und Nicht-Transmission bzw. Reflexion, als diejenige Wellenlänge definiert ist, bei der die Transmission gerade 50% beträgt. Die Änderung der spektralen Kante um den Ort des Lichteinfalls längs der Richtung x (vgl. Figur 1), d.h. längs der Variationsachse V, lässt sich mathematisch mit der Ableitung

$$\left.\frac{\partial \lambda_{\text{Kante}}(x,\theta)}{\partial x}\right|_{x_0,\theta_0}$$

beschreiben, wobei $\theta$ den Einfallswinkel des Hauptstrahls des Lichtes bezüglich einer Flächennormalen, die senkrecht zur Wirkfläche 12 verläuft, bezeichnet. Diese Ableitung bezeichnet die Längendispersion $D_L$. Ferner bezeichnet die Größe $x_0$ eine Bezugsposition in x-Richtung (vgl. Figur 1) und $\theta_0$ einen Entwurfseinfallswinkel, auf den das spektral selektive Bauelement 10 ausgelegt ist. Ist die Längendispersion $D_L$ konstant bzw. nahezu konstant, so ändert sich die spektrale Kante linear. In diesem Fall ist das spektral selektive Bauelement 10 ein linear variabler Strahlteiler bzw. ein linear variabler Filter.

Die Änderung der spektralen Kante in Abhängigkeit des Einfallswinkels, unter dem das Licht auf die Wirkfläche 12 fällt, wird mathematisch mit der Ableitung

$$\left.\frac{\partial \lambda_{Kante}(x,\theta)}{\partial \theta}\right|_{x_0,\theta_0}$$

beschrieben. Diese Ableitung bezeichnet die Einfallswinkeldispersion $D_e$.

Wird nun das spektral selektive Bauelement 10 nach Figur 1 beispielsweise als Strahlteiler oder als Filter in einem optischen Gerät, insbesondere einem Mikroskop eingesetzt, so ist zu beachten, dass es je nach Anwendung zu einer Variation des Einfallswinkels kommen kann, unter dem das Licht auf die Wirkfläche 12 des spektral selektiven Bauelementes 10 fällt. So durchlaufen beispielsweise in einem Weitfeldmikroskop die Hauptstrahlen der von verschiedenen Objektpunkten kommenden Lichtbündel für unterschiedliche Feldwinkel in der Regel verschiedene Bereiche auf der Wirkfläche 12 des spektral selektiven Bauelementes 10. Dementsprechend erfährt das Licht damit auch in Abhängigkeit des Einfallswinkels eine unterschiedliche Filterung, Mit anderen Worten besitzt die Wirkfläche 12 des spektral selektiven Bauelementes 10 eine Filterfunktion, die in Abhängigkeit des Einfallswinkels bzw. Feldwinkels variiert.

Das vorstehend erläuterte Problem tritt auch dann auf, wenn der Einfallswinkel des Lichtes auf die Wirkfläche 12 des spektral selektiven Bauelementes 10 nicht infolge unterschiedlicher Feldwinkel, sondern infolge einer Abtastbewegung des Lichtes variiert, wie sie beispielsweise im Beleuchtungsstrahlengang oder Detektionsstrahlengang eines Abtastmikroskops auftritt. Dieses Problem wird vermieden, wenn das spektral selektive Bauelement 10 am Ort eines Bildes einer Pupille, die ein Objektiv des optischen Gerätes aufweist, angeordnet wird. Am Ort eines Pupillenbildes treffen sich nämlich die Hauptstrahlen der verschiedenen Lichtbündel, die von verschiedenen Objektpunkten ausgehen, auf der optischen Achse des Strahlengangs. Dabei bezeichnet ein Hauptstrahl denjenigen Strahl, der von einem achsfernen Punkt ausgeht und in der Ebene der Eintrittspupille (gegebenenfalls in Verlängerung), in der Ebene der Aperturblende und in der Ebene der Austrittspupille (gegebenenfalls in Verlängerung) die optische Achse schneidet. Alle anderen Strahlen, die von dem betrachteten Objektpunkt ausgehend durch das optische System laufen, ordnen sich um diesen Haupt- oder Symmetriestrahl an. Durch diese weiter oben als erste Positionierung bezeichnete Anordnung des spektral selektiven Bauelementes 10 erfährt das Licht für alle Objektpunkt eine nahezu gleiche Filterfunktion durch das spektral selektive Bauelement 10. Gleiches gilt in einem Fall, in dem die Variation des Einfallswinkels duch eine Abtastbewegung des Lichtes verursacht wird.

Ein weiteres Problem ergibt sich nun dadurch, dass im Hinblick auf die gewünschten spektralen Eigenschaften des Bauelementes 10 der Strahldurchmesser des Lichtes, das auf die Wirkfläche 12 fällt, nicht vernachlässigt werden kann. Dies ist in der Darstellung nach Figur 1 durch den Durchmesser D des Lichtflecks 14 veranschaulicht. So liegt der Durchmesser der Austrittspupille eines Mikroskopobjektivs und damit auch der Strahldurchmesser des auf die Wirkfläche 12 fallenden Lichtes typischerweise in einem Bereich von 10 mm bis 20 mm. Diesem Strahldurchmesser wird rein beispielhaft in einem typischen Kantenwellenlängenbereichen von 400 nm bis 800 nm eine Längendispersion $D_L$ des spektral selektiven Bauelementes 10 gegenübergestellt, die etwa 10 nm/mm beträgt, um die Länge des Bauelementes L nicht zu groß werden zu lassen. Für einen Strahldurchmesser im Bereich von 10 mm bis 20 mm wird dann die Filterfunktion des spektral selektiven Bauelementes 10 über einen Kantenwellenlängenbereich gemittelt, dessen Breite zwischen 100 nm und 200 nm liegt. Damit kommt es gleichsam zu einer Verwaschung der Kantenwellenlänge über diesen Bereich.

Dieses Problem kann dadurch vermieden werden, dass der Strahldurchmesser des Lichtes reduziert wird. Dabei ist jedoch zu bedenken, dass eine solche Reduzierung des Strahldurchmessers im gleichen Maß zu einer Vergrößerung der auftretenden Einfallswinkel führt. So haben die aus einem Mikroskopobjektiv austretenden Hauptstrahlen aufgrund der gewünschten Bildfelder einen typischen Winkelbereich von ±2°. Eine beispielhafte Reduzierung des Strahldurchmessers um den Faktor 10, d.h. auf einen Bereich von 1 bis 2 mm, würde den vorgenannten Winkelbereich auf ±20° anwachsen lassen. Dies würde (gemäß der im Weiteren hergeleiteten Beziehung (8)) zu einer starken Variation der Kantenwellenlänge im Winkelbereich und damit über das Bild führen.

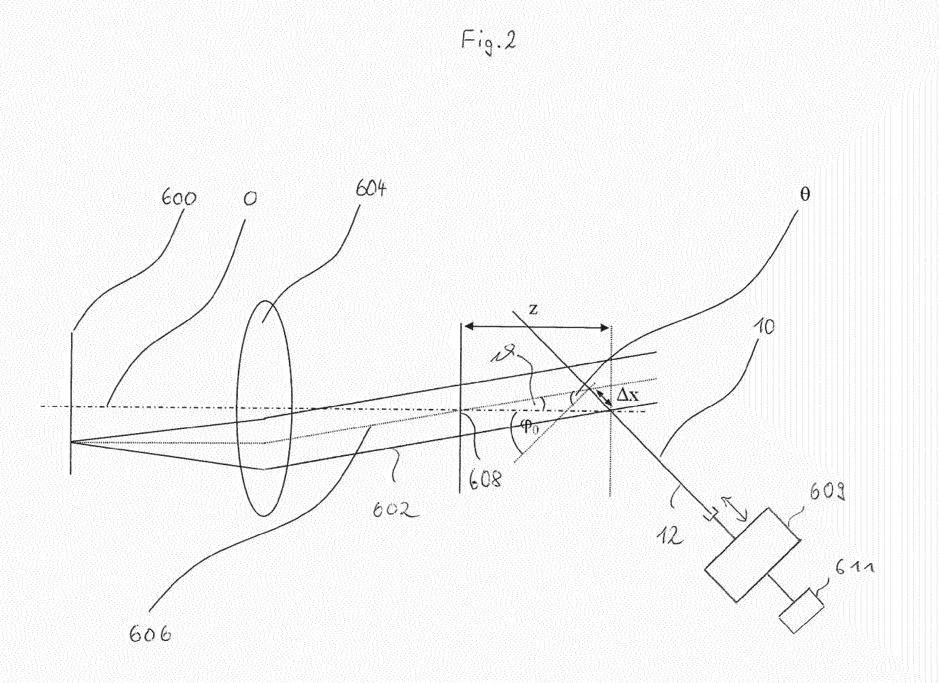

Die erfindungsgemäße Lösung zur Vermeidung der vorstehend erläuterten Problematik besteht nun darin, zum einen den Strahldurchmesser des auf das spektral selektive Bauelement 10 fallenden Lichtes auf ein im Hinblick auf das Verwaschen der spektralen Kante akzeptables Maß zu reduzieren und zum anderen das spektral selektive Bauelement 10 in dem Strahlengang an einer Stelle anzuordnen, an der die Kantenwellenlängenverschiebung infolge einer Variation des Lichteinfallsortes auf der Wirkfläche 12 gerade der gegenläufigen Kantenwellenverschiebung entspricht, welche durch eine Änderung des Einfallswinkels bedingt ist. Diese weiter oben als erste erfindungsgemäße Positionierung bezeichnete Anordnung des spektral selektiven Bauelementes 10 wird im Weiteren unter Bezugnahme auf Figur 2 erläutert.

Zunächst ist darauf hinzuweisen, dass die Darstellung nach Figur 2 stark vereinfacht ist und allein der Veranschaulichung der erfindungsgemäßen ersten Positionierung des spektral selektiven Bauelementes 10 dient.

Figur 2 zeigt ein von einem Objekt 600 kommendes, paralleles Lichtbündel 602, das durch eine Linsenanordnung 604 auf die Wirkfläche 12 des spektral selektiven Bauelementes 10 gerichtet wird. Das Lichtbündel 602 wird durch die Linsenanordnung 604 so abgelenkt, dass der in Figur 2 mit 606 bezeichnete Hauptstrahl des Lichtbündels 602 gegenüber der optischen Achse 0 des Strahlengangs unter einem Winkel $\vartheta$ geneigt ist. Dabei schneidet der Hauptstrahl 606 des Lichtbündels 602 die optische Achse 0 am Ort eines Pupillenbildes, der in Figur 2 mit 608 bezeichnet ist. Der Abstand, den die Wirkfläche 12 längs der optischen Achse O gegenüber dem Ort des Pupillenbildes 608 aufweist, ist in Figur 2 mit z bezeichnet. Die Wirkfläche 12 ist gegenüber der optischen Achse 0 so geneigt, dass ihre Flächennormale gegenüber der optischen Achse 0 einen Winkel $\varphi_0$ aufweist. In Figur 2 sind ferner ein Winkel $\Theta$, den der Hauptstrahl 606 und die Flächennormale der Wirkfläche 12 miteinander einschließen, sowie ein längs der Variationsachse V (vgl. Figur 1) gemessener Abstand x gezeigt, den der auf die Wirkfläche 12 fallende Hauptstrahl 606 gegenüber einem Punkt aufweist, in dem die optische Achse 0 die Wirkfläche 12 schneidet.

An dieser Stelle ist darauf hinzuweisen, dass die Darstellung nach Figur 2 stark vereinfacht ist. Es ist davon auszugehen, dass das betrachtete optische System aus Teilsystemen zusammengesetzt ist, die ihrerseits Eintrittspupillen und Austrittspupillen haben. Im Falle eines Mikroskops bezieht sich die Pupille auf die Austrittspupille des Objektivs.

Da das parallele Lichtbündel 602 unter dem Einfallswinkel $\Theta$ auf die Wirkfläche 12 fällt, trifft der Hauptstrahl 606 des Lichtbündels 602 im Abstand x von der optischen Achse 0 auf die Wirkfläche 12. Für die erfindungsgemäße Positionierung soll gelten, dass der Einfallswinkel $\Theta$ kleiner oder gleich dem Winkel $\varphi_0$ ist. Ferner wird vorausgesetzt, dass der Abstand z größer als 0 ist.

Unter den vorgenannten Voraussetzungen berechnet sich der Abstand x wie folgt:

$$x = z \frac{\sin(\varphi_0 - \theta)}{\sin(90° + \theta)} \quad (1)$$

Der Hauptstrahl 606 des Lichtbündels 602 trifft mit variierendem Einfallswinkel $\Theta$ auf unterschiedliche Stellen der Wirkfläche 12 des spektral selektiven Bauelementes 10. Damit erfährt das Lichtbündel 602 eine Filterung mit einer mit dem Einfallswinkel variierenden Kantenwellenlänge. Dieser Effekt wird erfindungsgemäß jedoch dadurch kompensiert, dass die Kantenwellenlängenverschiebung infolge einer Variation des Lichteinfallsortes auf der Wirkfläche 12 der gegenläufigen Kantenwellenverschiebung entspricht, die durch die Änderung des Einfallswinkels $\Theta$ bedingt ist. Dies lässt sich mathematisch durch folgende Beziehung beschreiben:

$$x \cdot D_L = -(\varphi_0 - \theta) \cdot D_E \quad (2)$$

Dabei soll $\varphi_0 = \theta_0$ gelten, da die Wirkfläche 12 des spektral selektiven Bauelementes 10 unter dem Winkel zur optischen Achse 0 angeordnet wird, auf den es ausgelegt ist.

Der Winkel $\vartheta$ des Hauptstrahls 606 zur optischen Achse 0 am Ort des Pupillenbildes 608 berechnet sich wie folgt:

$$\vartheta = \varphi_0 - \theta \quad (3)$$

Die Beziehung (1) lässt sich mit Hilfe der Beziehung (3) umschreiben:

$$x = z \frac{\sin(\vartheta)}{\sin(90° + \varphi_0 - \vartheta)} \quad (4)$$

Aus den Beziehungen (2), (3) und (4) ergibt sich:

$$z = -\frac{D_E}{D_L} \cdot \vartheta \cdot \frac{\sin(90° + \varphi_0 - \vartheta)}{\sin(\vartheta)} \quad (5)$$

Ferner existiert ein Hauptstrahl mit dem Winkel $\vartheta_0$, der folgenden Bedingung erfüllt:

$$z = -\frac{D_E}{D_L} \cdot \vartheta_0 \cdot \frac{\sin(90° + \varphi_0 - \vartheta_0)}{\sin(\vartheta_0)} \quad (6)$$

Die Einfallswinkeldispersion $D_E$ und die Längendispersion $D_L$ besitzen unterschiedliche Vorzeichen. Der Winkel $\vartheta_0$ ist also der Winkel eines Hauptstrahls, bei dem eine Verschiebung der Kantenlage aufgrund der Variation des Einfallsortes durch die einfallswinkelabhängige Kantenlagenverschiebung kompensiert ist und gleichzeitig die Abweichungen von der gewünschten Kompensation im gesamten Winkelbereich der Hauptstrahlen minimal sind.

Für die gewünschte Kompensation soll für die Winkel $\vartheta \neq 0$ aller Hauptstrahlen zumindest folgende Bedingung gelten:

$$z \leq -2 \cdot \frac{D_E}{D_L} \cdot \vartheta \cdot \frac{\sin(90° + \varphi_0 - \vartheta)}{\sin(\vartheta)} \quad (7)$$

Im Folgenden werden für die Einfallswinkeldispersion $D_E$ und die Beziehung (4) Näherungen hergeleitet (vgl. folgende Beziehungen (9) und (10)). Diese Näherungen sind auf konkrete Ausführungsbeispiele gerichtet. Es sind jedoch auch andere Näherungen möglich, die zu anderen technischen Realisierungen der erfindungsgemäßen Lösung führen. Angestrebt wird jedenfalls, dass eine Verschiebung der Kantenlage aufgrund der Variation des Einfallsortes durch die einfallswinkelabhängige Kantenlagenverschiebung kompensiert wird und gleichzeitig die Abweichungen von der Kompensation im gesamten Winkelbereich der Hauptstrahlen insgesamt minimal sind.

Die Änderung der spektralen Kante mit dem Einfallswinkel bei Interferenzfiltern, die für senkrechten Lichteinfall ausgebildet sind, lässt sich durch folgende Beziehung beschreiben (Warren J. Smith: Modern Optical Engineering, Third Edition, McGraw-Hill, 2000, Seite 208):

$$\lambda_{Kante}(\theta) = \lambda_{Kante}(\theta_0)\sqrt{1 - \frac{\sin^2(\theta)}{n^2}} \quad (8)$$

Dabei bezeichnet $\theta_0$ den Einfallswinkel, auf den der Filter ausgelegt ist und $n$ einen effektiven Brechungsindex. Obgleich die Beziehung (8) streng genommen nur für Winkel in der Nähe von $\theta_0 = 0°$ gültig ist, kann sie auch näherungsweise für Einfallswinkel verwendet werden, die in einem Winkelbereich um einen Einfallswinkel von $\theta_0 > 0°$ liegen, z.B. in einem Winkelbereich um $\theta_0 = 45°$. Die Ableitung der Beziehung (8)

$$\left.\frac{\partial \lambda_{Kante}(\theta)}{\partial \theta}\right|_{\theta_0} = a \cdot \lambda_{Kante}(\theta_0) \quad (9)$$

$$a = \frac{-\sin(\theta_0)\cos(\theta_0)}{n^2 \sqrt{1 - \frac{\sin^2(\theta_0)}{n}}}$$

mit der Konstanten      beschreibt die Änderung der

Kantenwellenlänge mit dem Einfallswinkel des Lichtes auf dem Interferenzfilter im Allgemeinen und auch auf das erfindungsgemäße spektral selektive Bauelement 10 im Speziellen.

Die Beziehung (1) lässt sich mit einer Konstanten k, beispielsweise mittels einer Taylor-Entwicklung, wie folgt durch eine lineare Anpassungsfunktion nähern:

$$x = z \cdot k \cdot (\varphi_0 - \theta) \quad (10)$$

Aus der Beziehung (2) ergibt sich dann mit den Beziehungen (9) und (10):

$$\left. \frac{\partial \lambda_{Kante}(x,\theta_0)}{\partial x} \right|_{x_0} = - \left. \frac{a \cdot \lambda_{Kante}(x,\theta_0)}{z \cdot k} \right|_{x_0} \quad (11)$$

Eine Lösung der Beziehung (11) stellt die folgende Beziehung dar:

$$\lambda_{Kante}(x,\theta_0) = \lambda_0 \cdot \exp\left(\frac{-a}{z \cdot k} \cdot x\right) \quad (12)$$

Dabei bezeichnet $\lambda_0$ die Startwellenlänge, d.h. die Wellenlänge am Nullpunkt der x-Koordinate.

Die Beziehung (12) stellt eine konkrete technische Realisierung dar, in der die spektrale Kante längs der Variationsachse V, d.h. in x-Richtung (vgl. Figur 1) exponentiell variiert. Es sind jedoch auch andere Realisierungen denkbar, z.B. mit einem linearen, quadratischen oder einem in anderer Weise variierenden Verlauf der spektralen Kante.

Wie in Figur 2 gezeigt, ist eine Antriebsvorrichtung 609 vorgesehen, mit der sich das spektral selektive Bauelement 10 in x-Richtung verschieben lässt, um den Ort, an dem das Licht auf die Wirkfläche 12 fällt, und damit die ortsabhängige spektrale Charakteristik nach Wunsch einzustellen. Die Antriebsvorrichtung 609 wird mittels einer Steuereinheit 611 angesteuert. Die Antriebsvorrichtung 609 kann zusätzlich auch so ausgeführt sein, dass sie eine Verstellung des spektralen selektiven Bauelementes 10 in z-Richtung, d.h. längs der optischen Achse ermöglicht.

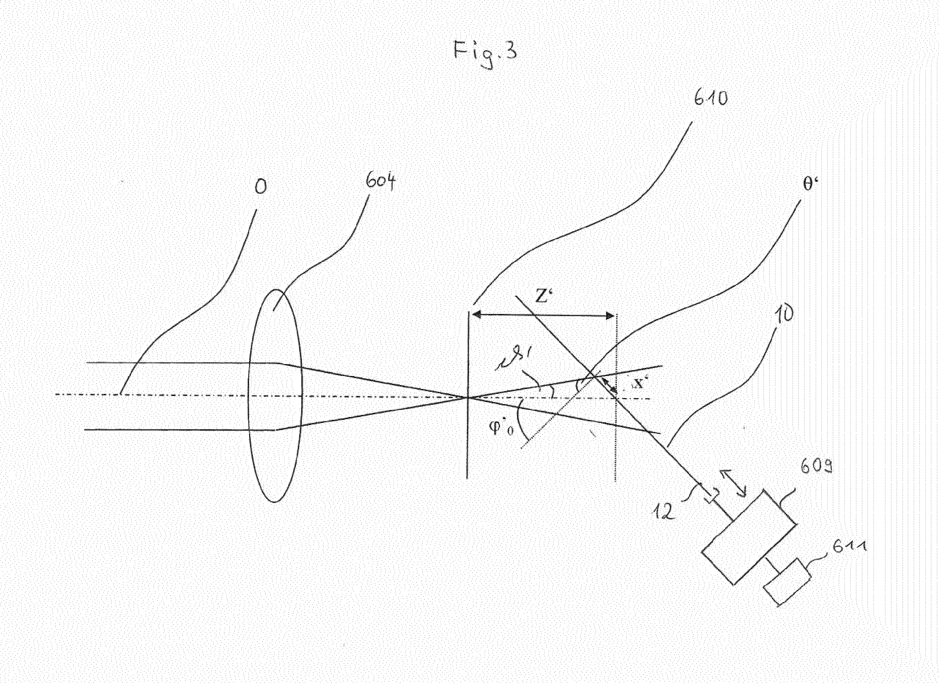

Neben der Möglichkeit, das spektral selektive Bauelement (10) in einem Abstand z zum Pupillenbild 608 anzuordnen, um eine Verschiebung der Kantenlage infolge der Variation des Lichteinfallsortes durch die einfallswinkelabhängige Kantenlagenverschiebung zu kompensieren, kann die gewünschte Kompensation auch dadurch erzielt werden, dass das spektral selektive Bauelement 10 entsprechend der Darstellung nach Figur 3 in einem Abstand z' zum einem Objektbild 608 bzw. einer hierzu konjungierten Ebene (oder auch dem Objekt selbst) positioniert wird. Die Berechnung des Abstandes z' erfolgt entsprechend der Berechnung des in Figur 2 gezeigten Abstandes z. In Figur 3 bezeichnet der Winkel $\varphi'_0$ den Winkel zwischen der optischen Achse 0 und der Flächennormalen der Wirkfläche 12. Der Winkel $\theta'$ bezeichnet den Einfallswinkel des entsprechenden Strahls bezüglich der Flächennormalen auf die Wirkfläche 12. Der Winkel $\vartheta' = \varphi'_0 - \theta'$ gibt den Winkel an, den der Strahl mit der optischen Achse 0 einschließt.

Bei der Anordnung nach Figur 3 ergibt sich eine sehr gute Kompensation für einzelne Objekt- bzw. Bildpunkte. Es findet nahezu keine Verwaschung über die Kantenbreite statt. Hingegen kommt es zu einer Variation der spektralen Eigenschaften über das Bildfeld, die mit größer werdendem Bildfeld zunimmt. Daher ist die Anordnung nach Figur 3 insbesondere für kleine Bildfelder vorteilhaft.

Im Folgenden werden verschiedene Ausführungsformen erfindungsgemäßer optischer Geräte beschrieben, die jeweils eines oder mehrere spektral selektive Bauelemente der in Figur 1 dargestellten Art enthalten. Die spektral selektiven Bauelemente sind dabei jeweils entweder in Schrägstellung zur optischen Achse des zugehörigen Strahlengangs gemäß den Figuren 2 und 3 in einem Abstand z zu einem Pupillenbild bzw. in einem Abstand z' zu einem Objektbild angeordnet, oder sind in orthogonaler bzw. nahezu orthogonaler Ausrichtung zur optischen Achse am Ort eines Pupillenbildes bzw. zumindest in dessen unmittelbarer Nähe angeordnet.

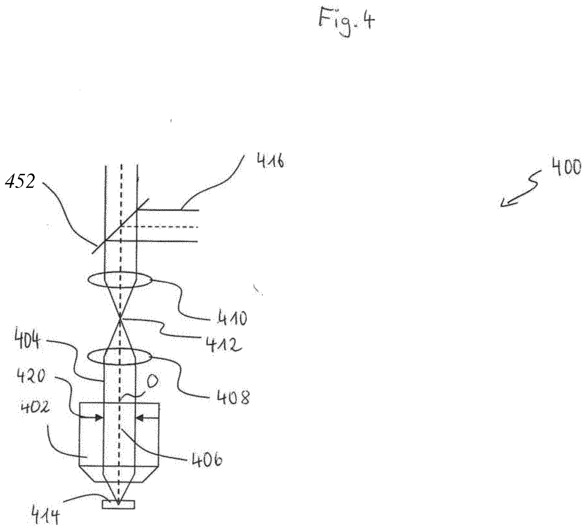

Figur 4 zeigt in einer schematischen Darstellung ein Mikroskop 400, das ein Ausführungsbeispiel des erfindungsgemäßen optischen Gerätes darstellt. Das Mikroskop 400 weist ein Objektiv 402 auf, das sich in einem Strahlengang 404 befindet. In dem Strahlengang 404 propagierendes Licht 406 durchläuft eine Linsenanordnung, die aus zwei Linsen 408 und 410 gebildet ist, zwischen denen ein Bild 412 einer Probe 414 erzeugt wird.

Das Mikroskop 400 enthält ferner ein erfindungsgemäßes spektral selektives Bauelement in Form eines Strahlteilers 452. Der Strahlteiler 452 ist mit seiner Wirkfläche unter einem Winkel von 45° zur optischen Achse 0 des Strahlengangs 404 angeordnet. Der Strahlteiler 452 hat die Funktion, einen ersten spektralen Anteil des Lichtes 406 in einen von dem Strahlengang 404 abgezweigten Teilstrahlengang 416 umzulenken. Ein von diesem ersten spektralen Anteil verschiedener zweiter spektraler Anteil des Lichtes 406 wird durch den Strahlteiler 452 transmittiert.

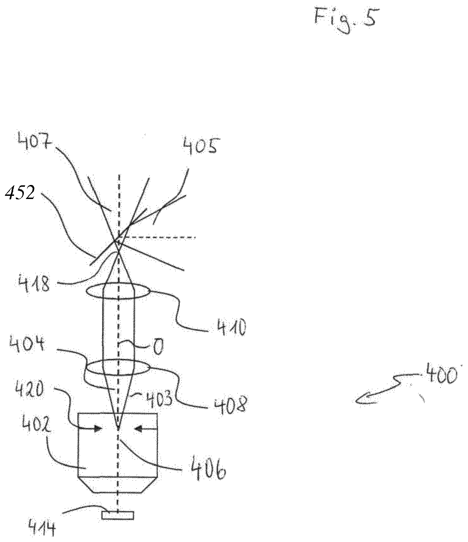

Figur 5 zeigt den Strahlengang der Pupillenabbildung, die zu der Anordnung nach Figur 4 gehört. Wie in Figur 5 dargestellt, ist der Strahlteiler 452 in dem Strahlengang 404 so angeordnet, dass er von einem Bild 418 einer Pupille 420 des Objektivs 402 beabstandet ist. Dabei ist der Abstand von dem Pupillenbild 418 vorzugsweise entsprechend der Beziehung (7) eingestellt. Die Strahlen der Pupillenabbildung sind in Figur 5 mit 403, 405 und 407 bezeichnet.

In der Anordnung nach den Figuren 4 und 5 hat das spektral selektive Bauelement 452 die Funktion eines Strahlteilers, der aus der Probe 414 stammendes Detektionslicht spektral aufspaltet. Es ist jedoch in der gezeigten Anordnung ebenso möglich, das spektral selektive Bauelement 452 als Strahlvereiniger zu nutzen, der Beleuchtungslicht unterschiedlicher spektraler Zusammensetzung, das von zwei separaten Lichtquellen emittiert wird, durch Reflexion und Transmission in dem Strahlengang 404 zusammenführt.

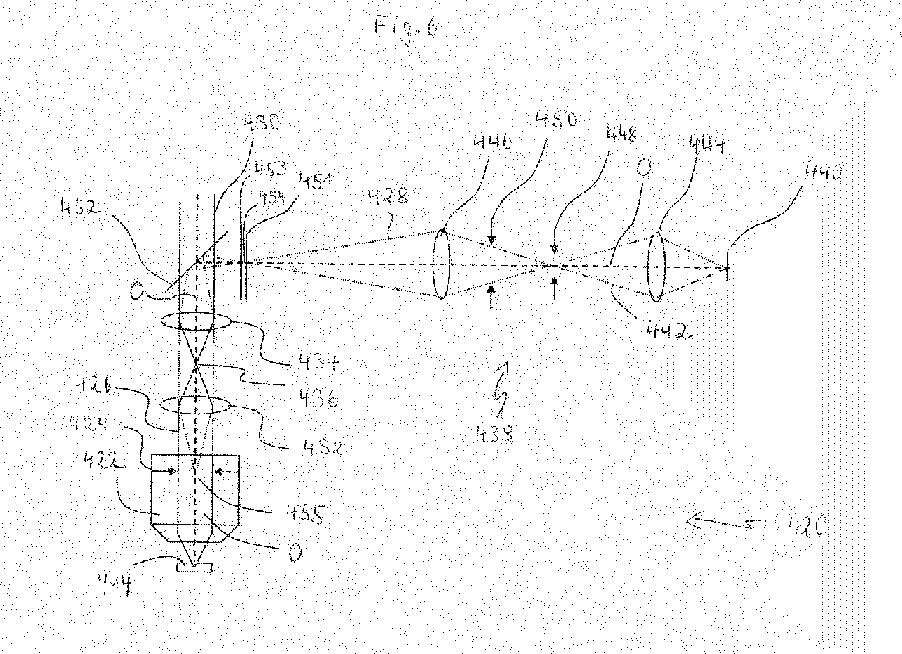

Figur 6 zeigt ein Mikroskop 420 als weiteres Ausführungsbeispiel. Das Mikroskop 420 weist ein Objektiv 422 mit einer Pupille 424 auf. Das Objektiv 422 ist in einem Strahlengang 426 angeordnet, in dem ein Beleuchtungsstrahlengang 428 und ein Detektionsstrahlengang 430 zusammengeführt sind. In dem für die Beleuchtung und die Detektion gemeinsam benutzen Strahlengang 426 befindet sich eine Linsenanordnung, die aus zwei Linsen 432 und 434 gebildet ist. Zwischen den beiden Linsen 432 und 434 wird ein Zwischenbild 436 der Probe 414 erzeugt.

Das Mikroskop 420 umfasst eine Beleuchtungseinheit 438 mit einer Lichtquelle 440, die Beleuchtungslicht 442 emittiert. In dem Beleuchtungsstrahlengang 428 der Beleuchtungseinheit 438 befindet sich ferner eine Linsenanordnung, die aus zwei Linsen 444 und 446 gebildet ist. Zwischen den beiden Linsen 444 und 446 sind eine Aperturblende 448 und eine Leuchtfeldblende 450 angeordnet. Die Beleuchtungseinheit 438 weist ferner zwei spektral selektive Bauelemente in Form eines Langpassfilters 451 bzw. eines Kurzpassfilters 453 auf, die zusammen einen Bandpassfilter bilden. Dieser Bandpassfilter dient beispielsweise dazu, einen Wellenlängenbereich einzustellen, in dem die Probe 414 in der gewünschten Weise zur Fluoreszenz angeregt wird. Der Langpassfilter 451 und der Kurzpassfilter 453 sind orthogonal zur optischen Achse 0 des Beleuchtungsstrahlengangs 428 angeordnet.

Das Mikroskop 420 hat ferner ein weiteres spektral selektives Bauelement erfindungsgemäßer Art in Form eines Strahlteilers 452. Der Strahlteiler 452 dient dazu, das von der Lichtquelle 440 emittierte Beleuchtungslicht durch Reflexion in den gemeinsamen Strahlengang 426 einzukoppeln. Ferner dient der Strahlteiler 452 dazu, aus der Probe 414 stammendes Detektionslicht durch Transmission in den Detektionsstrahlengang 430 einzukoppeln.

Die in Figur 6 gezeigte Anordnung weist demnach drei spektral selektive Bauelemente auf, die durch den Langpassfilter 448, den Kurzpassfilter 450 und den Strahlteiler 452 gegeben sind. Dabei befinden sich die beiden orthogonal zur optischen Achse des Beleuchtungsstrahlengangs 428 ausgerichteten Filter 448, 450 annähernd am Ort eines Bildes 454 der Lichtquelle 440. Demgegenüber ist der zur optischen Achse 0 schräg gestellte Strahlteiler 452 wiederum in einem Abstand zum Bild der Objektivpupille 424 angeordnet, der sich vorzugsweise nach der Beziehung (7) berechnet.

Durch die Anordnung nach Figur 6 ist eine sogenannte Auflichtbeleuchtung realisiert, bei der die Lichtquelle 440 in die Pupille 424 des Objektivs 422 abgebildet wird, wie in Figur 6 durch das Bezugszeichen 455 angedeutet ist. Somit befindet sich der Strahlteiler 452 in einem Abstand s' zum Bild der Lichtquelle 440 und in einem Abstand s zur Konjugierten der Objektivpupille 424. Statt in einem Abstand s zur Konjugierten der Objektivpupille 424 könnte der Strahlteiler 452 auch in einem Abstand s zur Objektivpupille 424 selbst angeordnet sein. Die vorstehend genannte Positionierung relativ zur Konjugierten der Objektivpupille 424 hat jedoch Vorteile. So befindet sich die Objektivpupille 424 zum einen häufig innerhalb des Objektivs 422 oder zumindest sehr nahe an der Anschraubfläche des Objektivs 422, wodurch eine Anordnung des Strahlteilers 452 in unmittelbarer Nähe des Objektivs 422 schwierig ist. Zum anderen ermöglich eine zusätzliche Abbildung der Objektivpupille 424 eine Anpassung der Abbildungsmaßstäbe, wodurch das Bild der Lichtquelle 440 nahe dem Strahlteiler 452 und in der Objektivpupille 424 unterschiedlich groß, d.h. angepasst gewählt werden kann.

In der Anordnung nach Figur 6 können noch weitere spektral selektive Bauelemente, die beispielsweise als Langpassfilter oder Kurzpassfilter ausgebildet sind, in die jeweiligen Strahlengänge eingebracht werden. So kann eine weitere Filterung des Lichtes insbesondere zur besseren spektralen Trennung von Anregungslicht und Detektionslicht sinnvoll sein.

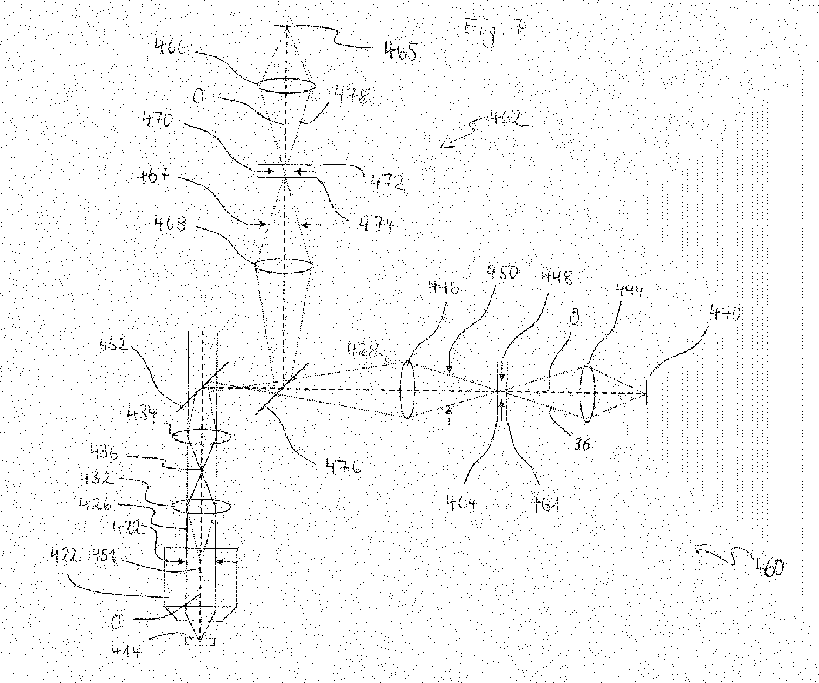

Figur 7 zeigt ein Mikroskop 460, das auf die in Figur 6 dargestellte Ausführungsform Bezug nimmt. Gegenüber letzterer Ausführungsform weist das Mikroskop 460 nach Figur 7 eine zusätzliche Beleuchtungseinheit 462 auf. Außerdem befinden sich in dem Mikroskop 460 ein Kurzpassfilter 461 und ein Langpassfilter 464, die den beiden Filtern 448 bzw. 450 der Anordnung nach Figur 6 entsprechen, am Ort der Aperturblende 448.

Die zusätzliche Beleuchtungseinheit 462 weist eine Lichtquelle 465 und eine aus zwei Linsen 466 und 468 gebildete Linsenanordnung auf. Zwischen den beiden Linsen 466 und 468 befindet sich eine Aperturblende 470. Am Ort der Aperturblende 470 sind zwei spektral selektive Bauelemente in Form eines Kurzpassfilters 472 bzw. eines Langpassfilter 474 angeordnet. Ferner weist die zusätzliche Beleuchtungseinheit 462 eine Leuchtfeldblende 467 auf.

Das Mikroskop 460 hat ein weiteres spektral selektives Bauelement in Form eines Strahlteilers 476. Der Strahlteiler 476 koppelt durch Reflexion von der Lichtquelle 465 der Beleuchtungseinheit 462 emittiertes Beleuchtungslicht 478 in den Beleuchtungsstrahlengang 428 der Beleuchtungseinheit 438 ein. Das an dem Strahlteiler 476 reflektierte Beleuchtungslicht 478 wird dann an dem Strahlteiler 452 wiederum in den für die Beleuchtung und die Detektion gemeinsam genutzten Strahlengang eingekoppelt.

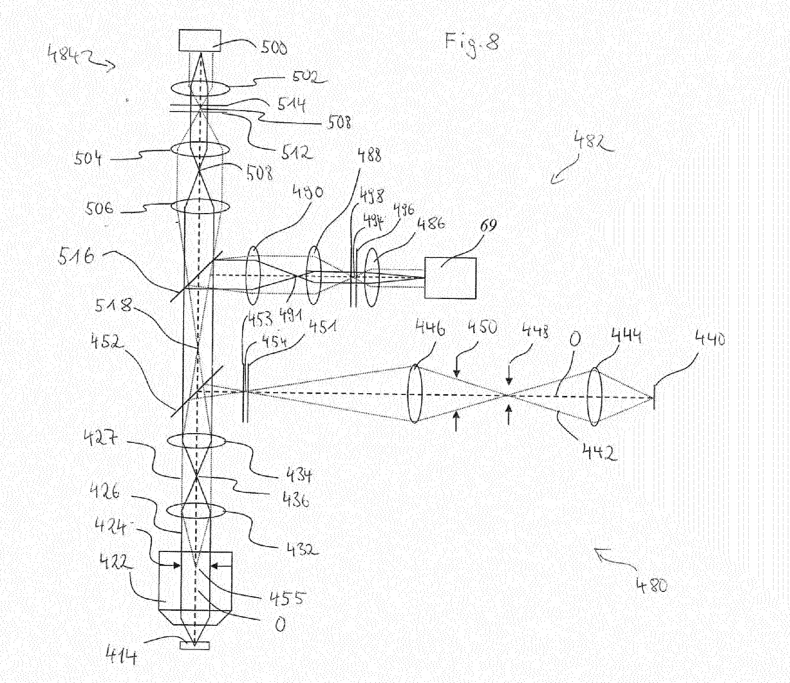

Figur 8 zeigt ein Mikroskop 480 als weiteres Ausführungsbeispiel. Dieses weitere Ausführungsbeispiel nimmt Bezug auf die Anordnung in Figur 6, in der die Detektionseinheit weggelassen ist.

Das Mikroskop 480 nach Figur 8 hat ein erstes Detektionsmodul 482 und ein zweites Detektionsmodul 484. Das erste Detektionsmodul 482 enthält eines aus drei Linsen 486, 488 und 490 gebildete Linsenanordnung, wobei zwischen den beiden Linsen 486 und 488 ein Bild 494 der Objektivpupille 424 erzeugt wird, während zwischen den Linsen 488 und 490 ein Zwischenbild 491 der Probe 414 generiert wird. Am Ort des Pupillenbildes 494 befinden sich zwei spektral selektive Bauelemente in Form eines Langpassfilters 496 bzw. eines Kurzpassfilters 498.

Das zweite Detektionsmodul 484 hat einen Detektor 500 sowie eine aus drei Linsen 502, 504 und 506 gebildete Linsenordnung. Zwischen den Linsen 502 und 504 wird ein Bild 508 der Objektivpupille 424 erzeugt. Demgegenüber wird zwischen den beiden Linsen 504 und 506 ein Zwischenbild 510 der Probe 414 erzeugt. Am Ort des Pupillenbildes 508 befinden sich zwei spektral selektive Bauelemente in Form eines Langpassfilters 512 und eines Kurzpassfilters 514.

Das Mikroskop 480 enthält ferner ein weiteres spektral selektives Bauelement in Form eines Strahlteilers 516, der einen ersten spektralen Anteil des durch das Objektiv 422 tretenden Detektionslichts durch Reflexion dem ersten Detektionsmodul 482 und einen davon verschiedenen zweiten spektralen Anteil des Detektionslichts 452 durch Transmission dem zweiten Detektionsmodul 484 zuführt. In Figur 8 bezeichnet ferner das Bezugszeichen 427 den Beleuchtungsstrahlengang und zugleich den Strahlengang der Pupillenabbildung.

In dem Mikroskop 480 sind die beiden Strahlteiler 452 und 516 jeweils in einem Abstand einem Pupillenbild 518 vorgeordnet bzw. nachgeordnet. Dabei ist dieser Abstand wiederum vorzugsweise gemäß der Beziehung (7) festgelegt.

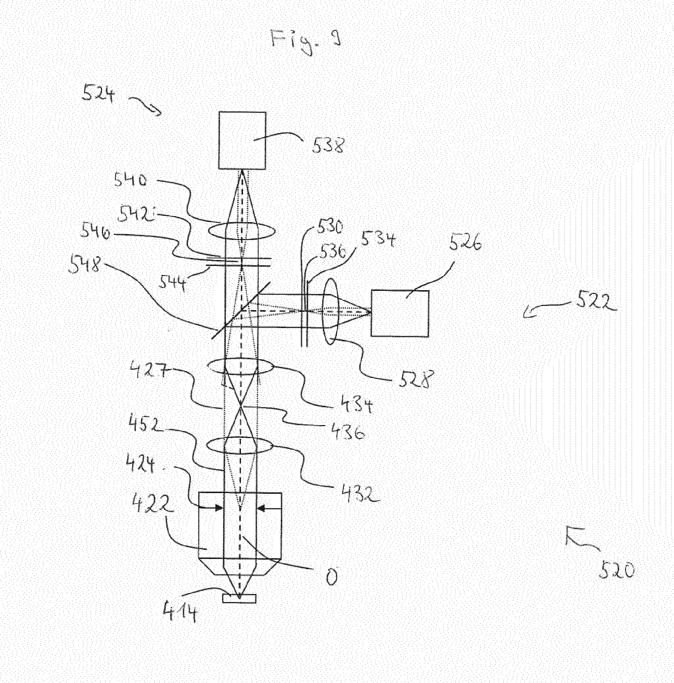

Figur 9 zeigt ein Mikroskop 520 als weiteres Ausführungsbeispiel. Dabei ist in Figur 9 der Beleuchtungsstrahlengang weggelassen. Letzterer kann wie in der in Figur 6 dargestellten Anordnung in Form einer Auflichtbeleuchtung in einen für die Beleuchtung und Detektion gemeinsam genutzten Strahlengang eingekoppelt werden. Der Beleuchtungsstrahlengang kann jedoch auch in anderer Weise in das Mikroskop 520 eingekoppelt werden, z.B. nach Art eines Durchlichtmikroskops, eines Lichtblattmikroskops oder eines Laserrastermikroskops.

Das Mikroskop 520 nach Figur 9 hat ein erstes Detektormodul 522 und ein zweites Detektormodul 524. Das erste Detektormodul 522 enthält einen Detektor 526, eine Linse 528 sowie zwei spektral selektive Bauelemente in Form eines Langpassfilters 530 bzw. eines Kurzpassfilters 534. Die beiden Filter 530, 534 sind am Ort eines Pupillenbildes 536 angeordnet.

Das zweite Detektormodul 524 enthält einen Detektor 538, eine Linse 540 sowie zwei spektral selektive Bauelemente in Form eines Langpassfilters 542 bzw. eines Kurzpassfilters 544. Die beiden Filter 542 und 544 sind am Ort eines Pupillenbildes 546 angeordnet.

In dem Detektionsstrahlengang 452 des Mikroskops 520 befindet sich ein weiteres spektral selektives Bauelement in Form eines Strahlteilers 548, der einen ersten spektralen Anteil des Detektionslichtes durch Reflexion dem Detektormodul 522 und einen davon verschiedenen spektralen Anteil durch Transmission dem Detektormodul 524 zuführt.

In der Anordnung nach Figur 9 befindet sich der Strahlteiler 548 in besonders vorteilhafter Weise lichtstromaufwärts der Pupillenbilder 534 und 546, in denen die Filterpaare 530, 532 bzw. 542, 544 angeordnet sind. Dies ermöglicht einen besonders kompakten Aufbau, da keine weitere Pupillenabbildung erforderlich ist.

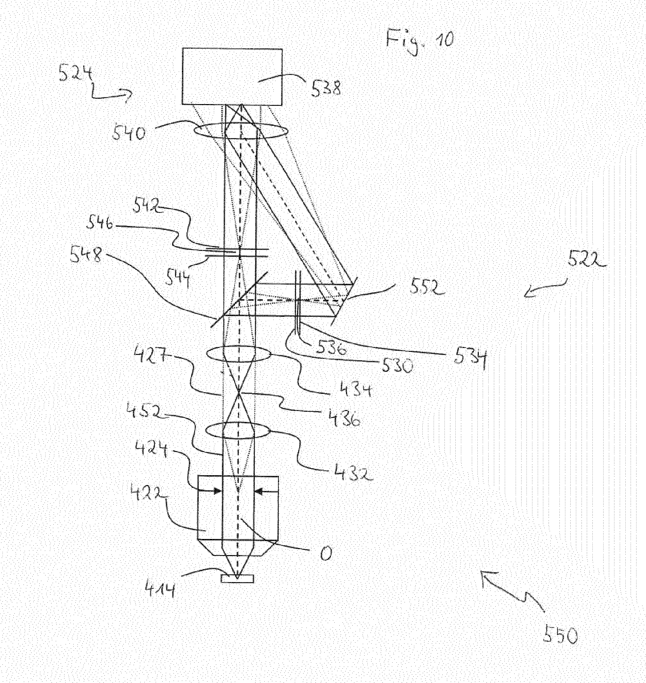

Figur 10 zeigt ein Mikroskop 550 als weiteres Ausführungsbeispiel, wobei dieses Ausführungsbeispiel auf die Anordnung nach Figur 9 Bezug nimmt.

Im Unterschied zu der in Figur 9 dargestellten Anordnung kommt bei dem Mikroskop 550 das erste Detektormodul 522 ohne eigenen Detektor aus. Hierzu weist das erste Detektormodul 522 einen Umlenkspiegel 552 auf, der den von dem Strahlteiler 548 reflektierten spektralen Anteil des Detektionslichtes auf den Detektor 538 des zweiten Detektormoduls 524 lenkt. Der Detektor 538 verfügt über zwei separate Detektorabschnitte, die ausgebildet sind, die durch den Strahlteiler 548 spektral voneinander getrennten Anteile des Detektionslichts getrennt voneinander zu erfassen.

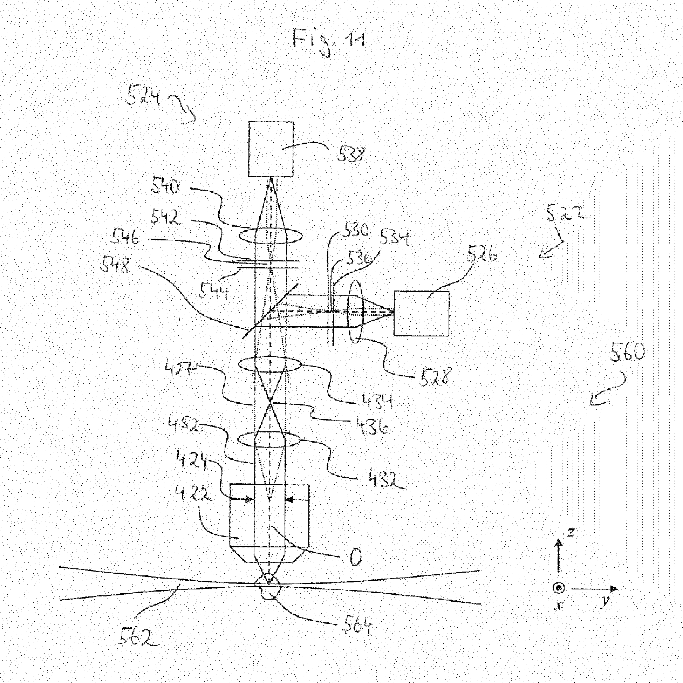

Figur 11 zeigt ein Mikroskop 560, das auf die Anordnung nach Figur 9 Bezug nimmt. Insbesondere zeigt Figur 11 ein Beispiel einer möglichen Probenbeleuchtung, nämlich unter Einsatz eines sogenannten Lichtblatts 562. Dieses Lichtblatt 562 stellt eine Beleuchtungslichtverteilung dar, die nur eine dünne Schicht innerhalb einer Probe 564 beleuchtet. In dem Ausführungsbeispiel nach Figur 11 wird das Lichtblatt 562 unter Bezugnahme auf das dort dargestellte xyz-Koordinatensystem in y-Richtung eingestrahlt, d.h. senkrecht zu der in z-Richtung ausgerichteten optischen Achse 0 des Detektionsstrahlengangs.

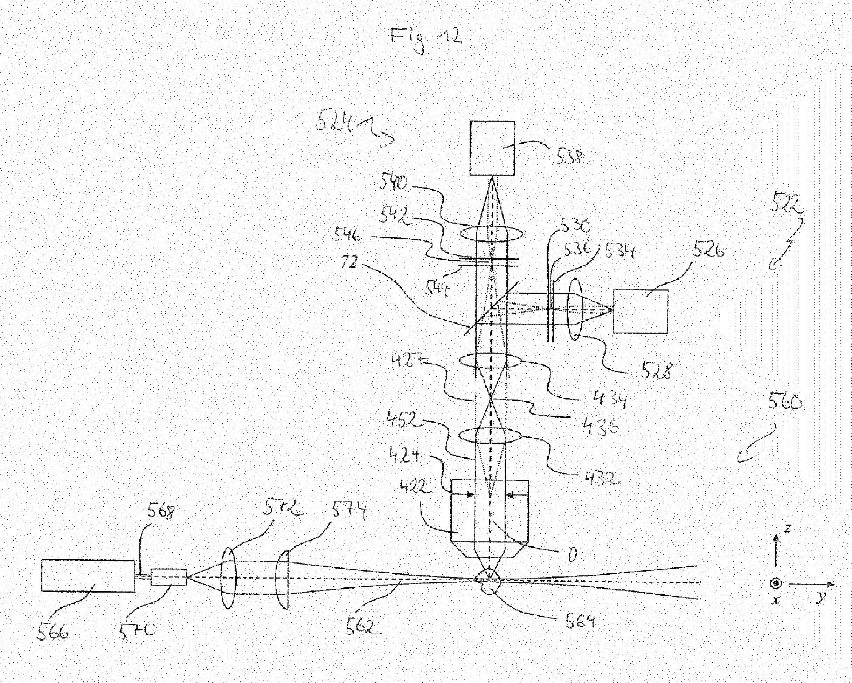

In Figur 12 ist beispielhaft gezeigt, wie das Lichtblatt 562 in einer konkreten technischen Umsetzung erzeugt werden kann. So enthält die Ausführungsform nach Figur 12 eine Laserlichtquelle 566, die einen Beleuchtungslichtstrahl 568 emittiert. Der Beleuchtungslichtstrahl 568 durchläuft dann einen Strahlaufweiter 570, eine Kollimatorlinse 572 sowie eine Zylinderlinse 574, die den Beleuchtungslichtstrahl 568 nur in Richtung der z-Achse, nicht jedoch in Richtung der x-Achse fokussiert.

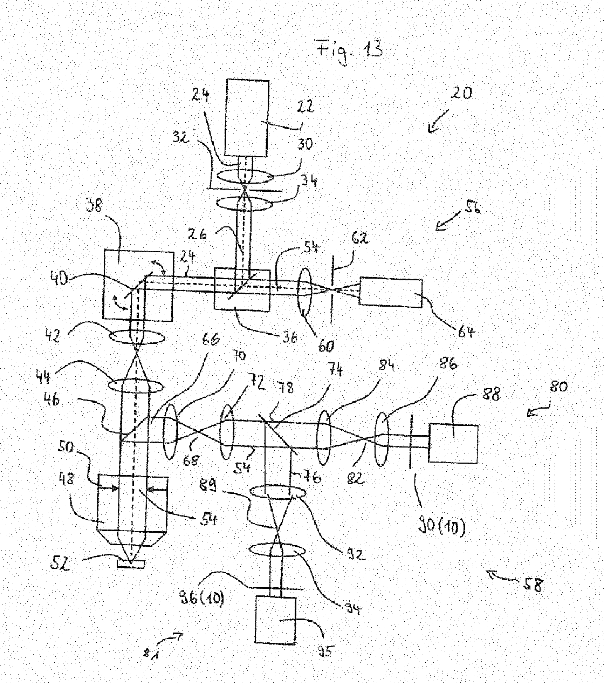

Im Folgenden werden unter Bezugnahme auf die Figuren 13 bis 21 weitere Ausführungsbeispiele beschrieben, in denen das erfindungsgemäße optische Gerät ein Abtastmikroskop ist, in dem das in einem Detektionsstrahlengang propagierende Licht eine Abtastbewegung ausführt.

Figur 13 zeigt in rein schematischer Darstellung ein erfindungsgemäßes Abtastmikroskop 20, das eine Anregungslichtquelle 22 enthält, die ein Beleuchtungslichtbündel 24 längs eines Beleuchtungsstrahlengangs 26 aussendet. Das Beleuchtungslichtbündel 24 wird von einer Linse 30 auf eine Anregungslochblende 32 fokussiert. Nach Durchtritt durch die Anregungslochblende 32 richtet eine weitere Linse 34 das Beleuchtungslichtbündel 24 auf einen Strahlteiler 36, der das Beleuchtungslichtbündel 24 auf eine Abtasteinheit 38 umlenkt, die einen oder mehrere bewegliche Abtastspiegel 40 enthält. Über eine Abtastoptik 42 und eine weitere Linse 44 fällt das mit Hilfe der Abtasteinheit 38 in einer Abtastbewegung umgelenkte Beleuchtungslichtbündel 24 auf einen Strahlteiler 46. Nach Durchtritt durch den Strahlteiler 46 gelangt das Beleuchtungslichtbündel 24 in ein Objektiv 48, das eine Objektivpupille 50 aufweist. Das Objektiv 48 fokussiert schließlich das Beleuchtungslichtbündel 24 auf eine Probe 52.

Mit Hilfe der Abtasteinheit 38 wird das Beleuchtungslichtbündel 24 derart abgelenkt, dass das durch das Objektiv 48 getretene Beleuchtungslichtbündel auf der Probe 52 eine Abtastbewegung ausführt. Durch das Beleuchtungslichtbündel 24 wird so in der Probe 52 Fluoreszenzstrahlung angeregt, die durch das Objektiv 48 in Form eines Detektionslichtbündels 54 zurück in das Abtastmikroskop 20 geleitet wird.

In der Ausführungsform nach Figur 13 wird das Detektionslichtbündel 54 zwei separaten, in Figur 13 allgemein mit 56 bzw. 58 bezeichneten Detektionseinheiten zugeführt. Die Detektionseinheit 56 empfängt das Detektionslichtbündel 54, nachdem dieses auf die Abtasteinheit 38 zurückgeführt worden ist. Die Detektionseinheit 56 bildet also eine Descanned-Einheit. Demgegenüber empfängt die Detektionseinheit 58 das Detektionslichtbündel 54, ohne dass dieses von der Abtasteinheit 38 beeinflusst worden ist. Die Detektionseinheit 58 stellt deshalb eine Non-Descanned-Einheit dar.

Die Descanned-Detektionseinheit 56 enthält eine Linse 60, die das Detektionslichtbündel 54, nachdem dieses durch die Abtasteinheit 38 umgelenkt und durch den Strahlteiler 36 geleitet worden ist, auf eine Detektionslochblende 62 fokussiert. Der Detektionslochblende 62 ist ein Detektor 64 nachgeordnet, der das Beleuchtungslichtbündel 54 empfängt. An dieser Stelle ist darauf hinzuweisen, dass der Strahlteiler 46 beispielsweise aus dem Strahlengang ausschwenkbar oder für die Fluoreszenzstrahlung teiltransmittiv ist.

Die Non-Descanned-Detektionseinheit 58 befindet sich in einem durch den Strahlteiler 46 von dem Beleuchtungsstrahlengang 26 abgezweigten Detektionsstrahlengang 66. Die Non-Descanned-Detektionseinheit 58 enthält beiderseits einer Zwischenbildebene 68, in der ein Zwischenbild der Probe 52 erzeugt wird, jeweils eine Linse 70 bzw. 72. Der Linse 72 ist in dem Detektionsstrahlengang 66 ein Strahlteiler 74 nachgeordnet, der ein spektral selektives Bauelement erfindungsgemäßer Art bildet. Der Strahlteiler 74 spaltet das Detektionslichtbündel 54 in zwei Teilbündel 76 und 78 auf, die zwei separaten, in Figur 2 allgemein mit 80 und 81 bezeichneten Detektionsmodulen zugeführt werden.

Das Detektionsmodul 80 weist beiderseits einer Zwischenbildebene 82, in der ein Zwischenbild der Probe 52 erzeugt wird, jeweils eine Linse 84 bzw. eine Linse 86 auf. Die Linse 86 richtet das Detektionslichtbündel 54 auf einen Detektor 88, dem ein Detektionsfilter 90 vorgeordnet ist.

Entsprechend weist das Detektionsmodul 81 beiderseits einer Zwischenbildebene 89, in der ebenfalls ein Zwischenbild der Probe 52 erzeugt wird, jeweils eine Linse 92 bzw. eine Linse 94 auf. Die Linse 94 richtet das Detektionslichtbündel 54 auf einen Detektor 95. Dem Detektor 95 ist ein Detektionsfilter 96 vorgeordnet.

Es ist darauf hinzuweisen, dass in der Anordnung nach Figur 13 die Strahlteiler 36, 46 und 74 jeweils dichroitisch ausgebildet sind und das auf sie fallende Licht in Abhängigkeit der Wellenlänge durchlassen bzw. reflektieren. So hat der Strahlteiler 36 die Eigenschaft, Licht im Wellenlängenbereich des Beleuchtungslichtbündels 24 zu reflektieren und Licht im Wellenlängenbereich des Detektionslichtbündels 54 durchzulassen. Entsprechend reflektiert der Strahlteiler 46 Licht im Wellenlängenbereich des Detektionslichtbündels 54, während er Licht im Wellenlängenbereich des Beleuchtungslichtbündels 24 durchlässt. Der Strahlteiler 74 wiederum lässt einen Teil des Detektionslichtbündels 54 durch, während er den übrigen Teil reflektiert.

Ferner ist darauf hinzuweisen, dass in der Darstellung nach Figur 13 das Beleuchtungslichtbündel 24 und das Detektionslichtbündel 54 einander teilweise überlagert sind. So bildet etwa der Strahlengang zwischen dem Strahlteiler 46 und der Probe 52 einen gemeinsamen Strahlengang für beide Lichtbündel 24 und 54.

In der speziellen Ausführungsform nach Figur 13 bilden die Detektionsfilter 90 und 96 jeweils ein spektral selektives Bauelement der in Figur 1 gezeigten Art. Dementsprechend ist den Detektionsfilter 90 und 96 in Figur 13 jeweils das Bezugszeichen 10, welches in Figur 1 das spektral selektive Bauelement bezeichnet, in Klammern nachgestellt.

In der speziellen Ausführungsform nach Figur 13 sind die Detektionsfilter 90 und 96 innerhalb des Detektionsstrahlengangs 66 derart angeordnet, dass sie sich jeweils am Ort eines Bildes der Objektivpupille 50 befinden. Diese Anordnung der Detektionsfilter 90 und 96 hat den Vorteil, dass der Lichteinfallsort auf der Wirkfläche 12 des Detektionsfilters 90 bzw. 96 konstant bleibt. Demzufolge tritt keine vom Ort des Lichteinfalls abhängige Kantenlagenverschiebung auf.

Insbesondere für den Fall, dass die durch die Abtasteinheit 38 erzeugte Abtastbewegung des Beleuchtungslichtbündels 24 und damit die entsprechende Kippbewegung des Detektionslichtbündels 54 am Ort des Pupillenbildes vergleichsweise gering sind, ergibt sich auch nur eine geringe winkelabhängige Verschiebung der spektralen Kante. Somit stellt die Ausführungsform nach Figur 13 für nicht zu große Scanwinkel eine vorteilhafte Lösung dar.

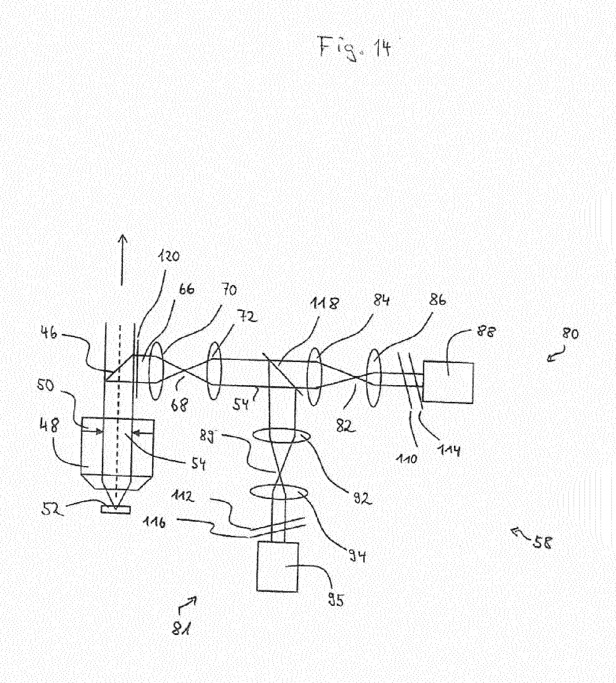

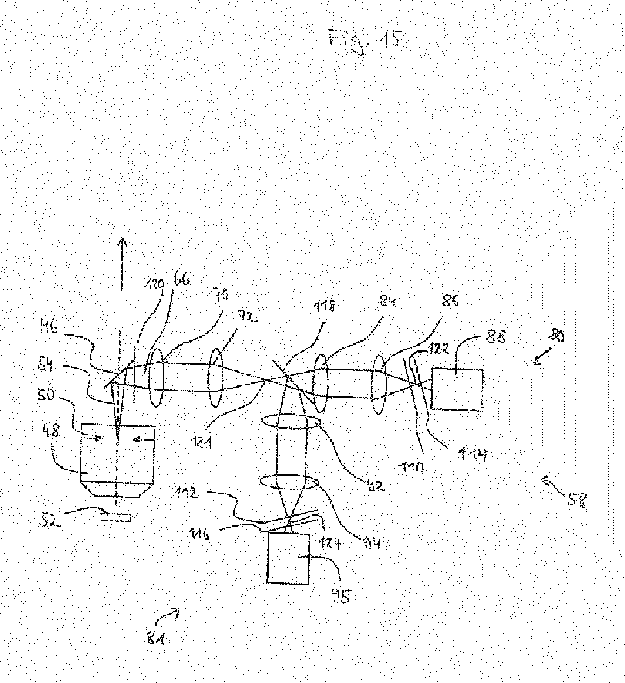

In den Figuren 14 und 15 ist eine abgewandelte Ausführungsform des in Figur 13 dargestellten Abtastmikroskops 20 gezeigt, bei der eine Kompensation der winkelabhängigen Kantenlagenverschiebung durch eine gegenläufige Kantenlagenverschiebung, die durch eine Variation des Lichteinfallsortes auf dem spektral selektiven Bauelement 10 verursacht wird, zur Anwendung kommt. Dabei sind in den Figuren 14 und 15 diejenigen Komponenten, die den in der Ausführungsform nach Figur 13 verwendeten Komponenten entsprechen, mit den schon in Figur 13 verwendeten Bezugszeichen versehen. In Figur 14 sind überdies lediglich diejenigen Komponenten dargestellt, die Teil der Non-Descanned-Detektionseinheit 58 sind oder mit dieser unmittelbar zusammenwirken. Entsprechendes gilt für alle weiteren Ausführungsbeispiele, die weiter unten unter Bezugnahme auf die Figuren 15 bis 21 beschrieben werden.

Im Unterschied zur Ausführungsform nach Figur 13 enthält die in Figur 14 dargestellte Ausführungsform vor den beiden Detektoren 88 und 95 jeweils ein Filterpaar, das aus einem Langpassfilter 110 bzw. 112 und einem Kurzpassfilter 114 bzw. 116 gebildet ist. Die beiden Filterpaare bilden somit jeweils ein Bandpassfilter mit zwei spektralen Kanten, die sich unabhängig voneinander variabel einstellen lassen. Jedes der Filter 110, 112, 114 und 116 ist entsprechend der Darstellung nach Figur 2 bzw. 3 schräg gestellt, um die gewünschte monotone Kantenlagenverschiebung in Abhängigkeit des Einfallswinkels zu erzielen.

Die Anordnung nach Figur 14 enthält ferner einen Strahlteiler 118, der wie die Filter 110, 112, 114 und 116 ein spektral selektives Bauelement der in Figur 1 gezeigten Art darstellt. Der Strahlteiler 118 ist mit seiner Wirkfläche unter einem Winkel von 45° zur optischen Achse des Detektionsstrahlengangs 66 angeordnet.

Ferner weist die Anordnung nach Figur 14 zusätzlich ein Sperrfilter 120 auf, das in dem Detektionsstrahlengang 66 der Linse 70 vorgeordnet ist. Der Sperrfilter 120 dient dazu, das an der Probe 52 reflektierte Anregungslicht zu blockieren, dessen Intensität um ein Vielfaches größer als die Intensität des detektierten Fluoreszenzlichtes ist.

Figur 15 zeigt den Strahlengang der Pupillenabbildung, die zu der Anordnung nach Figur 14 gehört. In der Darstellung nach Figur 15 lassen sich innerhalb des Detektionsstrahlengangs 66 diejenigen Orte erkennen, in denen sich jeweils ein Bild der Objektivpupille 50 befindet. Diese sind in Figur 15 mit 121, 122 und 124 bezeichnet. Der Strahlteiler 118 ist dem Ort 121 des Pupillenbildes in einem Abstand nachgeordnet, der entsprechend der oben angegebenen Bedingung (7) vorbestimmt ist. Entsprechendes gilt für das aus den Filtern 110 und 114 gebildete Filterpaar sowie das aus den Filtern 112 und 116 gebildete Filterpaar, wobei die Filter 110, 112 jeweils dem Ort des Pupillenbildes vorgeordnet und die Filter 114, 116 jeweils dem Ort des Pupillenbildes nachgeordnet sind. Die Abstände, die die Filter 110 und 114 vom Ort des Pupillenbildes aufweisen, sind dabei betragsmäßig gleich. Gleiches gilt für das Filterpaar 112, 116.

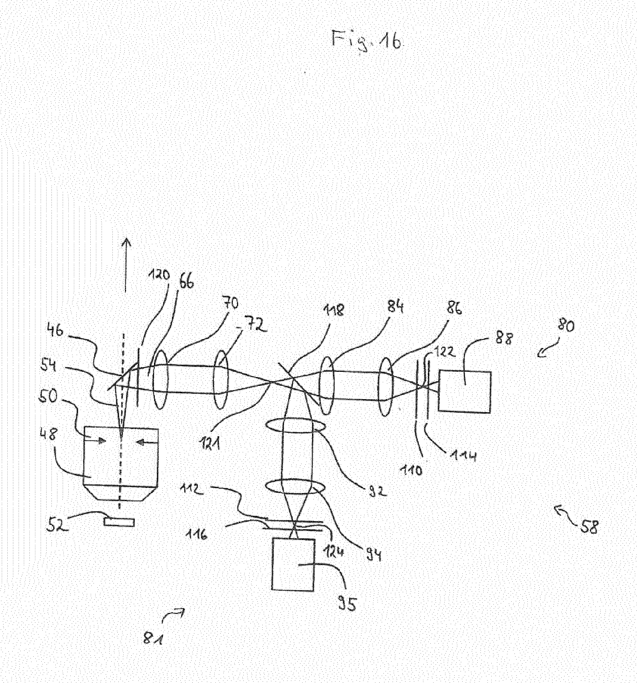

Figur 16 zeigt eine der Figur 15 entsprechende Darstellung der Pupillenabbildung für eine abgewandelte Ausführungsform, in der die Filter 110, 112, 114 und 116 nicht schräg gestellt, sondern rechtwinklig zur optischen Achse des Detektionsstrahlengangs 66 ausgerichtet sind. Dementsprechend sind die Filter 110, 112, 114 und 116 in dieser Ausführungsform entgegen der rein schematischen Darstellung nach Figur 16 praktisch am jeweiligen Ort des Pupillenbildes angeordnet.

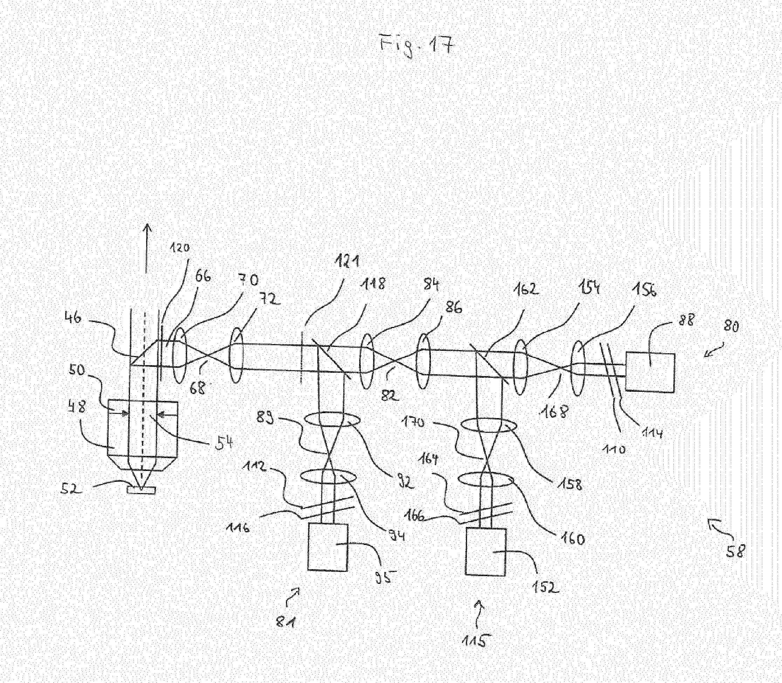

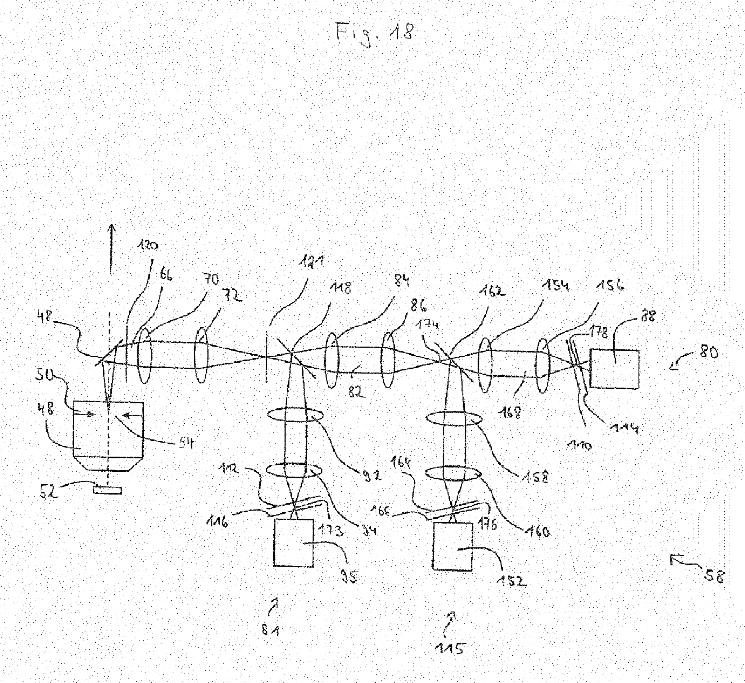

Die Figuren 17 und 18 zeigen eine weitere Ausführungsform, die gegenüber der Ausführungsform nach den Figuren 14 und 15 ein weiteres Detektionsmodul 115 mit einem zusätzlichen Detektor 152 enthält. Dementsprechend sind in dem Detektionsstrahlengang 66 weitere Linsen 154, 156, 158 und 160 vorgesehen. Außerdem enthält der Detektionsstrahlengang 66 einen weiteren Strahlteiler 162 sowie einen Langpassfilter 164 und einen Kurzpassfilter 166, die dem Detektor 152 vorgeordnet sind und in Kombination einen Bandpassfilter bilden. Die zusätzlichen Zwischenbildebenen, in denen jeweils ein Zwischenbild der Probe 52 erzeugt wird, sind in Figur 17 mit 168 und 170 bezeichnet. Der Darstellung der Pupillenabbildung nach Figur 18 sind ferner zusätzliche Orte 173, 174, 176 und 178 eines Pupillenbildes zu entnehmen.

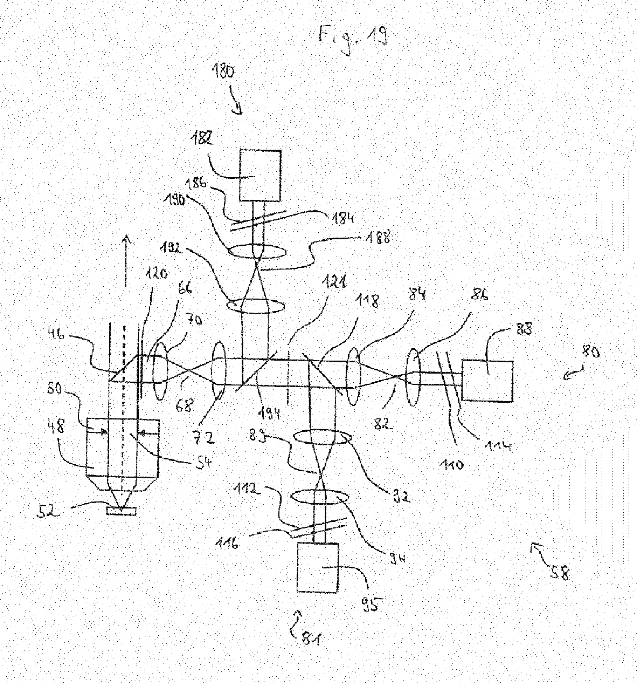

Figur 19 zeigt eine gegenüber der in den Figuren 17 und 18 dargestellten Anordnung modifizierte Ausführungsform, in der das Detektionsmodul 115 durch ein Detektionsmodul 180 ersetzt ist. Das Detektionsmodul 180 enthält einen Detektor 182, dem ein Langpassfilter 184 und ein Kurzpassfilter 186 vorgeordnet sind, die in Kombination einen Bandpassfilter bilden. Ferner enthält das Detektionsmodul 180 beiderseits einer Zwischenbildebene 188, in der ein Bild der Probe 52 erzeugt wird, zwei weitere Linsen 190 bzw. 192.

Zusätzlich zu dem Strahlteiler 118 enthält der Detektionsstrahlengang 66 in dieser Ausführungsform einen weiteren Strahlteiler 194 der in Figur 1 dargestellten Art. Die beiden Strahlteiler 118 und 194 sind in gleichem Abstand, der nach der Beziehung (7) festgelegt ist, vor bzw. hinter dem Ort 121 der Pupillenabbildung angeordnet. Dies ermöglicht einen besonders kompakten Aufbau, da verglichen mit der Ausführungsform nach den Figuren 17 und 18 die Zahl der optischen Elemente reduziert werden kann.

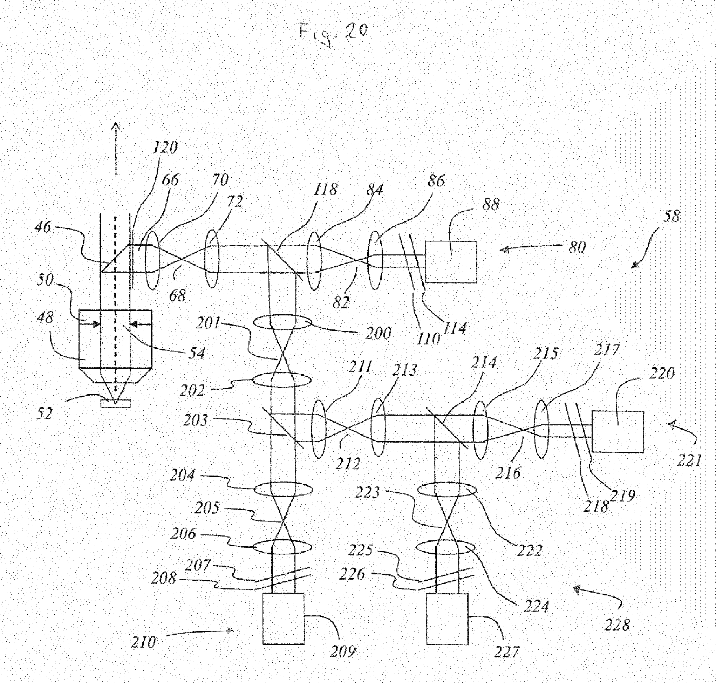

Figur 20 zeigt eine weitere Ausführungsform des Abtastmikroskops 20, die Bezug nimmt auf die Ausgestaltung nach Figur 19.

Die Ausführungsform nach Figur 20 enthält die Non-Descanned-Detektionseinheit 58, die insgesamt vier Detektionsmodule, nämlich das Detektionsmodul 80 sowie drei weitere Detektionsmodule 210, 221 und 228 umfasst. Den Detektionsmodulen 80, 210, 221 und 228 wird in nachfolgend beschriebener Weise das Detektionslichtbündel 54 spektral separiert mittels einer Strahlteilerkaskade zugeführt. Diese Strahlteilerkaskade ist aus dem Strahlteiler 118 sowie weiteren Strahlteilern 203 und 214 gebildet. Dabei sind die spektral selektiven Strahlteiler 118, 203 und 214 im Detektionsstrahlengang 66 mit ihren Wirkflächen jeweils unter einem Winkel von 45° zur optischen Achse des Detektionstrahlengangs 66 angeordnet. Außerdem sind die Strahlteiler 118, 203 und 214 jeweils dem Ort eines Bildes der Objektivpupille 50 in einem Abstand nachgeordnet, der entsprechend der Bedingungen (7) vorbestimmt ist.

Die Ausführungsform nach Figur 20 berücksichtigt den Umstand, dass die Strahlteiler 118, 203 und 214 jeweils einen größeren spektralen Bereich des Detektionslichtbündels 54 in Bezug auf die spektrale Kante reflektieren als transmittieren. Die Ausführungsform nach Figur 20 sieht deshalb eine Kaskadierung der Detektionsmodule 80, 210, 221 und 228 über die Reflexion an den Strahlteilern 118, 203 und 214 vor. Diese Ausführungsform berücksichtigt ferner den Umstand, dass jedem der Detektionsmodule 80, 210, 221 und 228 nur maximal derjenige spektrale Anteil des Detektionslichtbündels 54 zugeführt werden kann, der nicht von den jeweils anderen Detektionsmodulen detektiert wird. Dementsprechend sieht die Ausführungsform nach Figur 20 nicht nur eine Kaskadierung über die Strahlteilerreflexion, sondern auch über die Wellenlängen der spektralen Anteile vor, die mit den Detektionsmodulen 80, 210, 221 und 228 detektiert werden. Die zuletzt genannte Kaskadierung erfolgt beginnend mit der größten Wellenlänge hin zu kürzeren Wellenlängen.

Im Einzelnen transmittiert der Strahlteiler 118 den spektralen Anteil des Detektionslichtbündels 54, der innerhalb des Detektionslichts die größten Wellenlängen aufweist, in das Detektionsmodul 80. Dieser langwellige spektrale Anteil gelangt so nach Durchtritt durch die Linsen 84, 86 und das schräg gestellte Filterpaar, das durch den Langpassfilter 110 und den Kurzpassfilter 114 gebildet ist, zu dem Detektor 88. Der verbleibende spektrale Anteil des Detektionslichts wird an dem Strahlenteiler 118 durch Linsen 201, 202 auf den Strahlteiler 203 reflektiert. Der Strahlteiler 203 transmittiert denjenigen spektralen Anteil, der innerhalb des ihm zugeführten Detektionslichts die größten Wellenlängen aufweist, in das Detektionsmodul 210. Nach Durchtritt durch Linsen 204, 206 und ein schräg gestelltes Filterpaar, das aus einem Langpassfilter 207 und einem Kurzpassfilter 208 gebildet ist, gelangt der durch den Strahlteiler 203 transmittierte spektrale Anteil des Detektionslichts zu einem Detektor 209. Der verbleibende spektrale Anteil des Detektionslichts wird von dem Strahlteiler 203 durch Reflexion über Linsen 211, 213 dem Strahlteiler 214 zugeführt.

Der Strahlteiler 214 transmittiert denjenigen spektralen Anteil, der innerhalb des ihm zugeführten Detektionslichts die größten Wellenlängen aufweist, in das Detektionsmodul 221. Nach Durchtritt durch Linsen 215, 217 und ein schräg gestelltes Filterpaar, das aus einem Langpassfilter 218 und einem Kurzpassfilter 219 gebildet ist, gelangt dieser transmittierte spektrale Anteil zu einem Detektor 220. Den verbleibenden spektralen Anteil des ihm zugeführten Detektionslichts reflektiert der Strahlteiler 214, so dass dieser spektrale Anteil nach Durchtritt durch Linsen 222, 224 und ein schräg gestelltes Filterpaar, das aus einem Langpassfilter 225 und einem Kurzpassfilter 226 gebildet ist, zu einem Detektor 227 gelangt.

In der Anordnung nach Figur 20 bezeichnen die Bezugszeichen 201, 205, 212, 216 und 223 Orte, an denen ein Zwischenbild der Probe 52 erzeugt wird.

Die Anordnung nach Figur 20 sieht also vor, dass das Detektionslichtbündel 54 auf seinem Weg zu den Detektoren 88, 209, 220 und 227 jeweils nur genau eine Transmission an einem der Strahlteiler 118, 203 und 214 erfährt. Im Hinblick auf die Lichtausbeute ist dies von Vorteil, da die Reflexionsgrade der Strahlteiler 118, 203 und 214 höher als deren Transmissionsgrade sind.

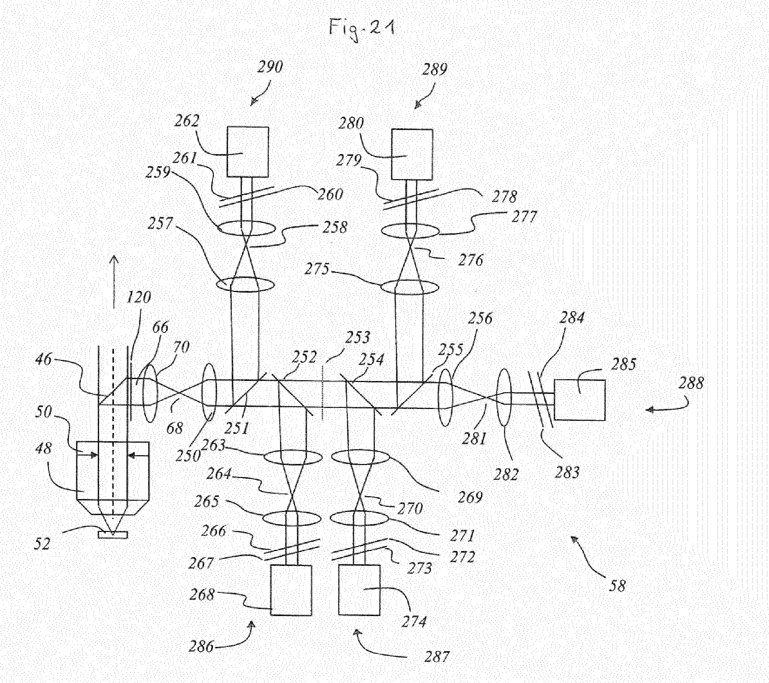

Figur 21 zeigt eine Ausführungsform, bei der Strahlteilerpaare 251, 252 bzw. 254, 255 vorgesehen sind, deren Strahlteiler unterschiedliche Dispersion und damit unterschiedliche Abstände von einem in Figur 21 mit 253 bezeichneten Ort der Pupillenabbildung aufweisen.

Die Ausführungsform nach Figur 21 umfasst insgesamt fünf Detektionsmodule 286, 287, 288, 289 und 290. Jedes dieser Detektionsmodule enthält zwei Linsen 263, 265, 269, 271, 256, 282, 275, 277, 257, 259 sowie ein schräg gestelltes Filterpaar, das aus einem Langpassfilter 266, 272, 283, 278, 260 und einem Kurzpassfilter 267, 273, 284, 279, 261 gebildet ist, und einen Detektor 268, 274, 285, 280, 262.

Wie weiter oben erwähnt, können die beiden Strahlteiler 251, 252 infolge ihrer unterschiedlichen Dispersion in unterschiedlichen Abständen vom Ort 251 der Pupillenabbildung angeordnet werden. Damit lassen sich in einer kompakten Anordnung dem Ort 251 der Pupillenabbildung mehrere Strahlteiler vorordnen. Entsprechendes gilt für die Nachordnung der beiden Strahlteiler 254, 255, die sich auf der anderen Seite des Orts 251 befinden.

Abschließend sei der Vollständigkeit halber noch einmal darauf hingewiesen, dass in vorstehend beschriebenen Detektionsanordnungen mit Ausnahme des Strahlteilers 46 und des Filters 120 sämtliche Strahlteiler und Filter, d.h. Kantenfilter, Langpassfilter und Kurzpassfilter, spektral selektive Bauelemente der erfindungsgemäßen Art bilden.

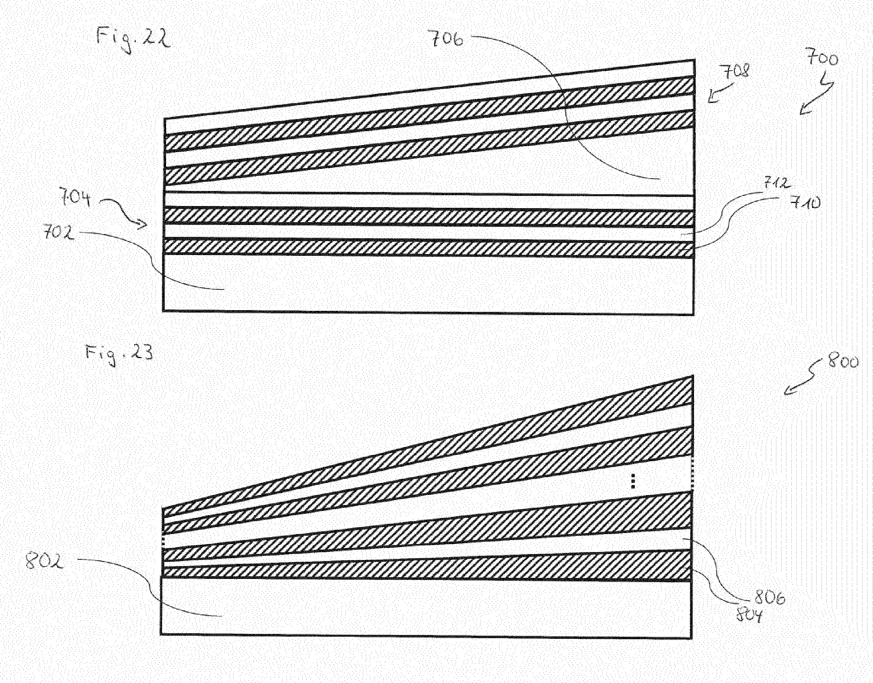

In den Figuren 22 und 23 sind zwei Ausführungsbeispiele für die konkrete technische Realisierung des erfindungsgemäßen spektral selektiven Bauelementes gezeigt.

In dem Ausführungsbeispiel nach Figur 22 ist das spektral selektive Bauelement als mehrschichtiges Fabry-Perot-Filter 700 ausgebildet. Demnach umfasst der Fabry-Perot-Filter 700 ein Trägersubstrat 702, auf dem in planparalleler Anordnung eine erste Reflexionsstruktur 704, eine angeschrägte oder keilförmige Raumfüllschicht 706 sowie eine gegenüber der ersten Reflexionsstruktur 704 schräggestellte zweite Reflexionsstruktur 708 in dieser Reihenfolge von dem Trägersubstrat 702 her betrachtet, angeordnet sind. Die erste Reflexionsstruktur 704 und die zweite Reflexionsstruktur 708 weisen jeweils einen mehrschichtigen Aufbau auf, in dem dielektrische Schichten alternierend unterschiedlicher Materialien aufeinander gestapelt sind. So können beispielsweise zwei Materialien eingesetzt werden, von denen eines einen relativ hohen Brechungsindex und das andere einen relativ geringen Brechungsindex aufweist. In Figur 22 sind zwei unmittelbar aufeinander gestapelte Schichten unterschiedlichen Materials mit 710 bzw. 712 bezeichnet.

Figur 23 zeigt eine beispielhafte Ausgestaltung des spektral selektiven Bauelementes in Form eines mehrschichtigen Interferenzfilters 800. Der Interferenzfilter 800 umfasst ein Trägersubstrat 802 und einen Stapel aus mehreren angeschrägten oder keilförmigen dielektrischen Schichten alternierend unterschiedlichen Materials.

In Figur 23 sind zwei dieser Schichten mit 804 bzw. 806 bezeichnet. Die Materialien dieser dielektrischen Schichten 804 und 806 sind beispielsweise so gewählt, dass eines dieser Materialien einen vergleichsweise hohen Brechungsindex und das andere einen vergleichsweise geringen Brechungsindex hat.

**Patentansprüche**

1. Optisches Gerät (400) mit einem optischen System (402) und mindestens einem in einem Strahlengang (404) angeordneten spektral selektiven Bauelement (10, 452, 700, 800) zur spektralen Beeinflussung von Licht (406, 602), das längs des Strahlengangs (404) propagiert,

    wobei das spektral selektive Bauelement (10, 452, 700, 800) aus einer mehrschichtigen Struktur (704, 708, 804, 806) gebildet ist, die eine Wirkfläche (12) mit mindestens einer spektralen Kante definiert, die mit dem Ort des Einfalls des Lichtes (406, 602) auf der Wirkfläche (12) variiert,
    wobei

    i) in einer ersten Positionierung die Wirkfläche (12) des spektral selektiven Bauelementes (10, 452, 700, 800) in dem Strahlengang (404) an einer Stelle angeordnet ist, an der eine Variation der spektralen Kante der Wirkfläche (12), die durch eine Variation des Einfallswinkels, unter dem das Licht (406, 602) auf die Wirkfläche (12) fällt, verursacht ist, zumindest teilweise durch eine gegenläufige Variation der spektralen Kante der Wirkfläche (12) kompensiert ist, die durch eine Variation des Ortes, an dem das Licht (406, 602) auf die Wirkfläche (12) fällt, verursacht ist, wobei die Variation des Einfallswinkels durch eine Abtastbewegung des Lichts zustande kommt oder dadurch, dass das Licht aus verschiedenen Lichtbündeln (602) zusammengesetzt ist, deren Hauptstrahlen (606) unterschiedliche Neigungen relativ zur optischen Achse (O) des Strahlengangs (404) aufweisen, oder

    wobei
    ii) in einer zweiten Positionierung die Wirkfläche (12) in dem Strahlengang (404) senkrecht zu dessen optischer Achse (O) am Ort (608) eines Bildes einer Pupille des optischen Systems (402) angeordnet ist, wobei der auf die optische Achse (O) des Strahlengangs (404) bezogene variierende Einfallswinkel, unter dem das Licht (406, 602) auf die Wirkfläche (12) fällt, gleich oder kleiner als 35° ist und dabei der Lichteinfallsort auf der Wirkfläche (12) konstant bleibt, wobei die Variation des Einfallswinkels durch eine Abtastbewegung des Lichts zustande kommt oder dadurch, dass das Licht aus verschiedenen Lichtbündeln (602) zusammengesetzt ist, deren Hauptstrahlen (606) unterschiedliche Neigungen relativ zur optischen Achse (O) des Strahlengangs (404) aufweisen.

2. Optisches Gerät (400) nach Anspruch 1, **dadurch gekennzeichnet, dass** die mehrschichtige Struktur (704, 708) eine Fabry-Perot-Anordnung (700) bildet.

3. Optisches Gerät (400) nach Anspruch 1 oder 2, **dadurch gekennzeichnet, dass** die Wirkfläche (12) des spektral selektiven Bauelementes (10, 452) in dem Strahlengang (404) derart angeordnet ist, dass ihre Flächennormale zur optischen Achse (O) des Strahlengangs (404) unter einem vorbestimmten Winkel ($\varphi_0$) geneigt ist, und dass die Wirkfläche (12) längs der optischen Achse (O) des Strahlengangs (404) einen Abstand (z) zum Ort (608) des Bildes der Pupille aufweist, der in Abhängigkeit der Variation des Einfallswinkels des Lichts (406, 602) vorbestimmt ist.

4. Optisches Gerät (400) nach Anspruch 3, **dadurch gekennzeichnet, dass** der genannte Abstand z derart vorbestimmt ist, dass folgende Bedingung erfüllt ist:

$$z \leq -2 \cdot \frac{D_E}{D_L} \cdot \vartheta \cdot \frac{\sin(90° + \varphi_0 - \vartheta)}{\sin(\vartheta)},$$

worin

$D_E$ eine Einfallswinkeldispersion bezeichnet, welche die Änderung der spektralen Kante in Abhängigkeit des Einfallswinkels, unter dem das Licht (406, 602) auf die Wirkfläche (12) fällt, angibt,

$D_L$ eine Längendispersion bezeichnet, welche die Änderung der spektralen Kante in Abhängigkeit des Ortes, auf dem das Licht auf die Wirkfläche (12) fällt, angibt,

$\vartheta$ einen Winkel ungleich Null zwischen einem Hauptstrahl des Lichts (406, 602) und der optischen Achse (O) des Strahlengangs (404) am Ort des Bildes der Pupille angibt, und

$\varphi_0$ den vorbestimmten Winkel angibt, unter dem die Flächennormale der Wirkfläche (12) zur optischen Achse (O) des Strahlengangs (404) geneigt ist.

5. Optisches Gerät (400) nach Anspruch 3 oder 4, **dadurch gekennzeichnet, dass** der vorbestimmte Winkel, unter dem die Flächennormale der Wirkfläche (12) zur optischen Achse (O) des Strahlengangs (404) geneigt ist, gleich oder kleiner als 65° ist.

6. Optisches Gerät (400) nach einem der vorhergehenden Ansprüche, **dadurch gekennzeichnet, dass** die spektrale Kante der Wirkfläche (12) des spektral selektiven Bauelementes (10, 452) monoton mit dem Ort des Einfalls des Lichts (406, 602) variiert.

7. Optisches Gerät (400) nach einem der vorhergehenden Ansprüche, **gekennzeichnet durch** einen Antrieb (609) zum Verstellen des spektral selektiven Bauelementes (10) in dem Strahlengang derart, dass der Ort des Einfalls des Lichts auf der Wirkfläche (12) einstellbar ist.

8. Optisches Gerät (400) nach Anspruch 7, **dadurch gekennzeichnet, dass** das spektral selektive Bauelement (10) mittels des Antriebs (609) längs einer Variationsachse verstellbar ist, längs der die spektrale Kante der Wirkfläche (12) variiert.

9. Optisches Gerät (400) nach einem der vorhergehenden Ansprüche, **dadurch gekennzeichnet, dass** der Strahlengang (404), in dem das mindestens eine spektral selektive Bauelement (10, 452) angeordnet ist, durch einen Beleuchtungsstrahlengang oder einen Detektionsstrahlengang oder einen dem Beleuchtungsstrahlengang und dem Detektionsstrahlengang gemeinsamen Strahlengangabschnitt gebildet ist.

10. Optisches Gerät (400) nach einem der vorhergehenden Ansprüche, **dadurch gekennzeichnet, dass** das mindestens eine spektral selektive Bauelement mindestens einen Strahlteiler (452) und/oder mindestens einen Kantenfilter (10) umfasst.

11. Optisches Gerät (400) nach Anspruch 10, **dadurch gekennzeichnet, dass** der mindestens eine Kantenfilter (10) mindestens einen Kurzpassfilter, mindestens einen Langpassfilter und oder mindestens einen Bandpassfilter umfasst.

12. Optisches Gerät (420) nach Anspruch 11, **dadurch gekennzeichnet, dass** der Bandpassfilter aus einem Kurzpassfilter (453) und einem Langpassfilter (451) gebildet ist, die längs der optischen Achse (O) des Strahlengangs hintereinander angeordnet sind.

13. Optisches Gerät (520) nach Anspruch 10, **gekennzeichnet durch** mindestens ein erstes und ein zweites Detektionsmodul (522, 524), wobei der Strahlteiler (548) das Licht spektral separiert durch Reflexion dem ersten Detektionsmodul (522) und durch Transmission dem zweiten Detektionsmodul (524) zuführt.

14. Optisches Gerät (550) nach Anspruch 13, **gekennzeichnet durch** einen von den beiden Detektionsmodulen (522, 524) gemeinsam genutzten Detektor (538) mit zwei Detektorabschnitten, von denen einer das durch den Strahlteiler (548) reflektierte Licht und der andere das durch den Strahlteiler (548) transmittierte Licht erfasst.

**15.** Optisches Gerät (480) nach Anspruch 10, **dadurch gekennzeichnet, dass** der mindestens eine Strahlteiler mindestens zwei Strahlteiler (452, 516) umfasst, von denen einer in dem Strahlengang dem Bild (518) der Pupille vorgeordnet und der andere dem Bild der Pupille nachgeordnet ist.

**16.** Optisches Gerät (420) nach Anspruch 15, **gekennzeichnet durch** mindestens drei Detektionsmodule (80, 210, 221, 228), wobei die mindestens zwei Strahlteiler (118, 203) eine Strahlteilerkaskade bilden, deren erster Strahlteiler (118) das Licht spektral separiert durch Transmission einem ersten der Detektionsmodul (80) und durch Reflexion einem zweiten Strahlteiler (203) der Strahlteilerkaskade zuführt, der dann das durch den ersten Strahlteiler (118) reflektierte Licht durch Transmission einem zweiten der genannten Detektionsmodule (210) und durch Reflexion direkt oder indirekt über einen weiteren Strahlteiler (214) einem dritten der genannten Detektionsmodule (221, 228) zuführt.

**17.** Optisches Gerät nach Anspruch 10, **dadurch gekennzeichnet, dass** der mindestens eine Strahlteiler mindestens zwei Strahlteiler (251, 252, 254, 255) umfasst, die in dem Strahlengang beide (251, 252) dem Bild (253) der Pupille vorgeordnet oder beide (254, 255) dem Bild (253) der Pupille nachgeordnet sind.

**18.** Optisches Gerät (400) nach einem der vorhergehenden Ansprüche, **dadurch gekennzeichnet, dass** das optische System eine Abbildungsoptik, insbesondere ein Objektiv (402) ist.

**19.** Optisches Gerät (420) nach einem der vorhergehenden Ansprüche, **dadurch gekennzeichnet, dass** das Licht (442) zur Probenbeleuchtung längs des Strahlenganges (428) propagiert.

**20.** Optisches Gerät (420) nach einem der vorhergehenden Ansprüche, **dadurch gekennzeichnet, dass** das optische Gerät (420) einen Strahlteiler (452) zum Vereinigen eines Beleuchtungsstrahlenganges (428) und eines Detektionsstrahlengangs (430) in dem Strahlengang beinhaltet.

**21.** Optisches Gerät (400, 560) nach einem der vorhergehenden Ansprüche, **dadurch gekennzeichnet, dass** das optische Gerät ein Mikroskop, insbesondere ein Abtastmikroskop (560) oder ein Weitfeldmikroskop (400), ist.

**22.** Optisches Gerät nach Anspruch 21, **dadurch gekennzeichnet, dass** das optische Gerät ein Weitfeldmikroskop in Form eines Fluoreszenzmikroskops, eines Hellfeldmikroskops, eines Lichtblattmikroskops (560) mit oder ohne Schiefebenenbeleuchtung, eines Weitfeld-Multiphotonenmikroskops, Dunkelfeldmikroskops, Phasenkontrastmikroskops oder eines Differentialinterferenzkontrastmikroskops ist.

**Claims**

**1.** Optical device (400) having an optical system (402) and at least one spectrally selective component (10, 452, 700, 800), which is arranged in a beam path (404), for spectrally influencing light (406, 602) propagating along the beam path (404),

wherein the spectrally selective component (10, 452, 700, 800) is formed from a multilayer structure (704, 708, 804, 806), which defines an effective surface (12) with at least one spectral edge that varies with the location of the incidence of the light (406, 602) on the effective surface (12),
wherein,

i) in a first positioning, the effective surface (12) of the spectrally selective component (10, 452, 700, 800) is arranged in the beam path (404) at a point at which a variation of the spectral edge of the effective surface (12) caused by a variation of the angle of incidence at which the light (406, 602) is incident on the effective surface (12) is compensated for at least partially by an opposite variation of the spectral edge of the effective surface (12) caused by a variation of the location at which the light (406, 602) is incident on the effective surface (12), wherein the variation of the angle of incidence is brought about by a scanning movement of the light or by the light being composed of different light beams (602), the chief rays (606) of which have different inclinations relative to the optical axis (O) of the beam path (404), or
wherein,
ii) in a second positioning, the effective surface (12) is arranged in the beam path (404) perpendicular to its optical axis (O) at the location (608) of an image of a pupil of the optical system (402), wherein the varying angle of incidence that refers to the optical axis (O) of the beam path (404) and at which the light (406, 602) is incident on the effective surface (12) is equal to or less than 35° and the light incidence location on the effective surface (12) remains constant, wherein the variation of the angle of incidence is brought about by a scanning movement of the light or by the light being composed of different light beams (602), the chief rays (606) of which have different inclinations relative to the optical axis (O) of the beam path (404).

2. Optical device (400) according to Claim 1, **characterized in that** the multilayer structure (704, 708) forms a Fabry-Perot arrangement (700).

3. Optical device (400) according to Claim 1 or 2, **characterized in that** the effective surface (12) of the spectrally selective component (10, 452) is arranged in the beam path (404) such that its surface normal is inclined with respect to the optical axis (O) of the beam path (404) at a predetermined angle ($\varphi_0$), and **in that** the effective surface (12) has, along the optical axis (O) of the beam path (404), a distance (z) from the location (608) of the image of the pupil that is predetermined in dependence on the variation of the angle of incidence of the light (406, 602).

4. Optical device (400) according to Claim 3, **characterized in that** said distance z is predetermined such that the following condition is met:

$$Z \leq -2 \cdot \frac{D_E}{D_L} \cdot \vartheta \cdot \frac{\sin(90° + \varphi_0 - \vartheta)}{\sin(\vartheta)},$$

wherein

$D_E$ denotes an incidence angle dispersion indicating the change in the spectral edge in dependence on the angle of incidence at which the light (406, 602) is incident on the effective surface (12),
$D_L$ denotes a length dispersion indicating the change in the spectral edge in dependence on the location at which the light is incident on the effective surface (12),
$\vartheta$ indicates a non-zero angle between a chief ray of the light (406, 602) and the optical axis (O) of the beam path (404) at the location of the image of the pupil, and $\varphi_0$ indicates the predetermined angle at which the surface normal of the effective surface (12) is inclined with respect to the optical axis (O) of the beam path (404).

5. Optical device (400) according to Claim 3 or 4, **characterized in that** the predetermined angle at which the surface normal of the effective surface (12) is inclined with respect to the optical axis (O) of the beam path (404) is equal to or less than 65°.

6. Optical device (400) according to one of the preceding claims, **characterized in that** the spectral edge of the effective surface (12) of the spectrally selective component (10, 452) varies monotonically with the location of the incidence of the light (406, 602).

7. Optical device (400) according to one of the preceding claims, **characterized by** a drive (609) for adjusting the spectrally selective component (10) in the beam path such that the location of the incidence of the light on the effective surface (12) is settable.

8. Optical device (400) according to Claim 7, **characterized in that** the spectrally selective component (10) is adjustable by means of the drive (609) along a variation axis along which the spectral edge of the effective surface (12) varies.

9. Optical device (400) according to one of the preceding claims, **characterized in that** the beam path (404) in which the at least one spectrally selective component (10, 452) is arranged is formed by an illumination beam path or a detection beam path or a beam path section that is common to the illumination beam path and the detection beam path.

10. Optical device (400) according to one of the preceding claims, **characterized in that** the at least one spectrally selective component comprises at least one beam splitter (452) and/or at least one edge filter (10).

11. Optical device (400) according to Claim 10, **characterized in that** the at least one edge filter (10) comprises at least one shortpass filter, at least one longpass filter and/or at least one bandpass filter.

12. Optical device (420) according to Claim 11, **characterized in that** the bandpass filter is formed from a shortpass filter (453) and a longpass filter (451), which are arranged one behind the other along the optical axis (O) of the beam path.

13. Optical device (520) according to Claim 10, **characterized by** at least a first and a second detection module (522, 524), wherein the beam splitter (548) guides the light spectrally separated by reflection to the first detection module (522) and by transmission to the second detection module (524).

14. Optical device (550) according to Claim 13, **characterized by** a detector (538), which is used together by the two detection modules (522, 524) and has two detector sections, of which one captures the light reflected by the beam splitter (548) and the other one captures the light transmitted by the beam splitter (548) .

15. Optical device (480) according to Claim 10, **characterized in that** the at least one beam splitter comprises at least two beam splitters (452, 516), one of which is arranged in the beam path upstream of the image (518) of the pupil and the other is arranged downstream of the image of the pupil.

16. Optical device (420) according to Claim 15, **characterized by** at least three detection modules (80, 210, 221, 228), wherein the at least two beam splitters (118, 203) form a beam splitter cascade, of which the first beam splitter (118) guides the light spectrally separated by transmission to a first one of the detection modules (80) and by reflection to a second beam splitter (203) of the beam splitter cascade, which second beam splitter (203) subsequently guides the light reflected by the first beam splitter (118) by transmission to a second one of said detection modules (210) and by reflection directly or indirectly via a further beam splitter (214) to a third one of said detection modules (221, 228).

17. Optical device according to Claim 10, **characterized in that** the at least one beam splitter comprises at least two beam splitters (251, 252, 254, 255), which are both (251, 252) arranged in the beam path upstream of the image (253) of the pupil or which are both (254, 255) arranged downstream of the image (253) of the pupil.

18. Optical device (400) according to one of the preceding claims, **characterized in that** the optical system is an imaging optical unit, in particular an objective (402).

19. Optical device (420) according to one of the preceding claims, **characterized in that** the light (442) for sample illumination propagates along the beam path (428) .

20. Optical device (420) according to one of the preceding claims, **characterized in that** the optical device (420) includes a beam splitter (452) for combining an illumination beam path (428) and a detection beam path (430) in the beam path.

21. Optical device (400, 560) according to one of the preceding claims, **characterized in that** the optical device is a microscope, in particular a scanning microscope (560) or a widefield microscope (400).

22. Optical device according to Claim 21, **characterized in that** the optical device is a widefield microscope in the form of a fluorescence microscope, of a bright-field microscope, of a light sheet microscope (560) with or without oblique-plane illumination, of a widefield multiphoton microscope, dark-field microscope, phase-contrast microscope or of a differential interference contrast microscope.

## Revendications

1. Appareil optique (400), comprenant un système optique (402) et au moins un composant spectralement sélectif (10, 452, 700, 800) disposé sur une trajectoire des rayons (404) et destiné à influencer spectralement la lumière (406, 602) qui se propage le long de la trajectoire des rayons (404),

le composant spectralement sélectif (10, 452, 700, 800) étant réalisé à partir d'une structure multicouche (704, 708, 804, 806) qui définit une surface active (12) dotée d'au moins une arête spectrale qui varie selon l'emplacement de l'incidence de la lumière (406, 602) sur la surface active (12), dans lequel

i) selon un premier positionnement, la surface active (12) du composant spectralement sélectif (10, 452, 700, 800) est disposée sur la trajectoire des rayons (404) à un endroit où une variation de l'arête spectrale de la surface active (12), qui est provoquée par une variation de l'angle d'incidence selon lequel la lumière (406, 602) est incidente sur la surface active (12), est compensée au moins partiellement par une variation contraire de l'arête spectrale de la surface active (12), qui est provoquée par une variation de l'emplacement où la lumière (406, 602) est incidente sur la surface active (12), la variation de l'angle d'incidence étant réalisée par un mouvement de balayage de la lumière ou en ce que la lumière est composée de différents faisceaux lumineux (602) dont les rayons principaux (606) présentent différentes inclinaisons par rapport à l'axe optique (O) de la trajectoire des rayons (404), ou dans lequel

ii) selon un deuxième positionnement, la surface active (12) est disposée sur la trajectoire des rayons (404) verticalement à l'axe optique (O) de celle-ci à l'emplacement (608) d'une image d'une pupille du système optique (402), l'angle d'incidence variable relatif à l'axe optique (O) de la trajectoire des rayons (404) selon lequel la lumière (406, 602) est incidente sur la surface active (12) étant égal ou inférieur à 35° et l'emplacement d'incidence de lumière sur la surface active (12) restant alors constant, la variation de l'angle d'incidence étant réalisée par un mouvement de balayage de la lumière ou en ce que la lumière est composée de différents faisceaux lumineux (602) dont les rayons principaux (606) présentent différentes inclinaisons par rapport à l'axe optique (O) de la trajectoire des rayons (404).

2. Appareil optique (400) selon la revendication 1, **caractérisé en ce que** la structure multicouche (704, 708) constitue un agencement de Fabry-Pérot (700).

3. Appareil optique (400) selon la revendication 1 ou 2, **caractérisé en ce que** la surface active (12) du composant spectralement sélectif (10, 452) est disposée sur la trajectoire des rayons (404) de telle sorte que sa normale à la surface est inclinée par rapport à l'axe optique (O) de la trajectoire des rayons (404) selon un angle prédéterminé ($\varphi_0$), et **en ce que** la surface active (12) présente le long de l'axe optique (O) de la trajectoire des rayons (404) une distance (z) par rapport à l'emplacement (608) de l'image de la pupille qui est prédéterminé en fonction de la variation de l'angle d'incidence de la lumière (406, 602).

4. Appareil optique (400) selon la revendication 3, **caractérisé en ce que** ladite distance z est prédéterminée de telle sorte que la condition suivante est satisfaite :

$$z \leq -2 \cdot \frac{D_E}{D_L} \cdot \vartheta \cdot \frac{sin(90° + \varphi_0 - \vartheta)}{sin(\vartheta)}$$

où

$D_E$ désigne une dispersion d'angle d'incidence qui indique le changement de l'arête spectrale en fonction de l'angle d'incidence selon lequel la lumière (406, 602) est incidente sur la surface active (12),

$D_L$ désigne une dispersion longitudinale qui indique le changement de l'arête spectrale en fonction de l'emplacement où la lumière est incidente sur la surface active (12),

$\vartheta$ indique un angle différent de zéro entre un rayon principal de la lumière (406, 602) et l'axe optique (O) de la trajectoire des rayons (404) à l'emplacement de l'image de la pupille, et

$\varphi_0$ indique l'angle prédéterminé selon lequel la normale à la surface de la surface active (12) est inclinée par rapport à l'axe optique (O) de la trajectoire des rayons (404).

5. Appareil optique (400) selon la revendication 3 ou 4, **caractérisé en ce que** l'angle prédéterminé selon lequel la normale à la surface de la surface active (12) est inclinée par rapport à l'axe optique (O) de la trajectoire des rayons (404) est égal ou inférieur à 65°.

6. Appareil optique (400) selon l'une quelconque des revendications précédentes, **caractérisé en ce que** l'arête spectrale de la surface active (12) du composant spectralement sélectif (10, 452) varie de façon monotone avec l'emplacement de l'incidence de la lumière (406, 602) .

7. Appareil optique (400) selon l'une quelconque des revendications précédentes, **caractérisé par** un entraînement (609) destiné à régler le composant spectralement sélectif (10) sur la trajectoire des rayons de telle sorte que l'emplacement de l'incidence de la lumière sur la surface active (12) est réglable.

8. Appareil optique (400) selon la revendication 7, **caractérisé en ce que** le composant spectralement sélectif (10) est réglable au moyen de l'entraînement (609) le long d'un axe de variation, le long duquel varie l'arête spectrale de la surface active (12).

9. Appareil optique (400) selon l'une quelconque des revendications précédentes, **caractérisé en ce que** la trajectoire des rayons (404) sur laquelle est disposé ledit au moins un composant spectralement sélectif (10, 452) est formée par une trajectoire des rayons d'éclairage ou une trajectoire des rayons de détection ou une partie de trajectoire des rayons commune à la trajectoire des rayons d'éclairage et à la trajectoire des rayons de détection.

10. Appareil optique (400) selon l'une quelconque des revendications précédentes, **caractérisé en ce que** ledit au moins un composant spectralement sélectif comprend au moins un séparateur de faisceau (452) et/ou au moins un filtre à arêtes (10).

11. Appareil optique (400) selon la revendication 10, **caractérisé en ce que** ledit au moins un filtre à arêtes (10) comprend au moins un filtre passe-court, au moins un filtre passe-long et/ou au moins un filtre passe-bande.

12. Appareil optique (420) selon la revendication 11, **caractérisé en ce que** le filtre passe-bande est formé par un filtre passe-court (453) et un filtre passe-long (451) qui sont disposés l'un après l'autre le long de l'axe optique (O) de la trajectoire des rayons.

13. Appareil optique (520) selon la revendication 10, **caractérisé par** un premier et un deuxième module de détection (522, 524), le séparateur de faisceau (548) amenant de manière spectralement séparée la lumière au premier module de détection (522) par réflexion et au deuxième module de détection (524) par transmission.

14. Appareil optique (550) selon la revendication 13, **caractérisé par** un détecteur (538) utilisé en commun par les deux modules de détection (522, 524) et doté de deux parties de détecteur dont l'un détecte la lumière réfléchie par le séparateur de faisceau (548) et l'autre détecte la lumière transmise par le séparateur de faisceau (548).

15. Appareil optique (480) selon la revendication 10, **caractérisé en ce que** ledit au moins un séparateur de faisceau comprend au moins deux séparateurs de faisceau (452, 516) dont l'un est placé en amont de l'image (518) de la pupille sur la trajectoire des rayons et l'autre est placé en aval de l'image de la pupille.

16. Appareil optique (420) selon la revendication 15, **caractérisé par** au moins trois modules de détection (80, 210, 221, 228), les au moins deux séparateurs de faisceau (118, 203) formant une cascade de séparateurs de faisceau dont le premier séparateur de faisceau (118) amène de manière spectralement séparée la lumière par transmission à un premier des modules de détection (80) et par réflexion à un deuxième séparateur de faisceau (203) de la cascade de séparateurs de faisceau qui amène ensuite la lumière réfléchie par le premier séparateur de faisceau (118) à un deuxième desdits modules de détection (210) par transmission et directement ou indirectement par l'intermédiaire d'un autre séparateur de faisceau (214) à un troisième desdits modules de détection (221, 228) par réflexion.

17. Appareil optique selon la revendication 10, **caractérisé en ce que** ledit au moins un séparateur de faisceau comprend au moins deux séparateurs de faisceau (251, 252, 254, 255) qui sont tous les deux (251, 252) placés en amont de l'image (253) de la pupille sur la trajectoire des rayons ou sont tous les deux (254, 255) placés en aval de l'image (253) de la pupille.

18. Appareil optique (400) selon l'une quelconque des revendications précédentes, **caractérisé en ce que** le système optique est une optique d'imagerie, en particulier un objectif (402).

19. Appareil optique (420) selon l'une quelconque des revendications précédentes, **caractérisé en ce que** la lumière (442) se propage le long de la trajectoire des rayons (428) pour l'éclairage d'échantillons.

20. Appareil optique (420) selon l'une quelconque des revendications précédentes, **caractérisé en ce que** l'appareil optique (420) comporte un séparateur de faisceau (452) destiné à réunir une trajectoire des rayons d'éclairage (428) et une trajectoire des rayons de détection (430) sur la trajectoire des rayons.

21. Appareil optique (400, 560) selon l'une quelconque des revendications précédentes, **caractérisé en ce que** l'appareil optique est un microscope, en particulier un microscope à balayage (560) ou un microscope à champ large (400).

22. Appareil optique selon la revendication 21, **caractérisé en ce que** l'appareil optique est un microscope à champ large sous la forme d'un microscope à fluorescence, d'un microscope à fond clair, d'un microscope à lame de lumière (560) avec ou sans éclairage de plan incliné, d'un microscope à photons multiples à champ large, d'un microscope à fond noir, d'un microscope à contraste de phase ou d'un microscope à contraste interférentiel différentiel.

EP 3 333 611 B1

Fig.1

EP 3 333 611 B1

Fig.2

600  O  604  θ

z

ϑ

Δx

φ₀

10

608

602

12

609

611

606

Fig.3

Fig. 4

EP 3 333 611 B1

Fig. 5

Fig.6

Fig. 7

Fig. 8

Fig. 9

Fig. 10

EP 3 333 611 B1

Fig. 11

Fig. 12

Fig. 13

Fig. 14

Fig. 15

Fig. 16

Fig. 17

EP 3 333 611 B1

Fig. 18

EP 3 333 611 B1

Fig. 19

Fig. 20

Fig-21

Fig.22

Fig.23

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006034908 A1
- DE 102014008098 A1
- DE 102010045856 A1

**In der Beschreibung aufgeführte Nicht-Patentliteratur**

- **WARREN J. SMITH.** Modern Optical Engineering. McGraw-Hill, 2000, 208